# EUROPÄISCHE PATENTSCHRIFT

(11) **EP 4 038 744 B1**
(45) Veröffentlichungstag und Bekanntmachung des Hinweises auf die Patenterteilung: **02.11.2022**
(21) Anmeldenummer: 21820544.1
(22) Anmeldetag: 26.11.2021
(51) Int. Cl.: H04B 1/38, B29C 49/04, B29C 49/20, G06K 19/077, H04B 1/59, B29C 39/02, B29C 39/10

(54) **KUNSTSTOFFBEHÄLTER MIT TRANSPONDER ZUR KURZREICHWEITENKOMMUNIKATION UND HERSTELLUNGSVERFAHREN**
PLASTIC CONTAINER WITH TRANSPONDER FOR SHORT RANGE COMMUNICATIONS AND METHOD OR MANUFACTURE
CONTENEUR EN PLASTIQUE AVEC TRANSPONDEUR POUR COMMUNICATION À COURTE PORTÉE ET PROCÉDÉ DE FABRICATION

(30) Priorität: 30.11.2020 DE 102020131682
(43) Veröffentlichungstag der Anmeldung: 10.08.2022
(73) Patentinhaber: Kautex Textron GmbH & Co. KG, 53229 Bonn (DE)
(72) Erfinder: WERNER, Kevin, 51147 Köln (DE); GUSE, Christoph, 53359 Rheinbach (DE)
(74) Vertreter: Richly & Ritschel Patentanwälte PartG mbB
(86) Internationale Anmeldenummer: PCT/EP2021/083164
(87) Internationale Veröffentlichungsnummer: WO 2022/112501

(56) Entgegenhaltungen:
- DE-B4-102008 058 353
- JP-A- 2006 127 141
- US-A1- 2008 110 774
- US-A1- 2019 084 722

## Beschreibung

Die vorliegende Erfindung betrifft einen Transponder zur Kurzreichweitenkommunikation mit einem Kunststoffgehäusekörper, einer Antenne und einem mit der Antenne elektrisch verbundenen Kommunikationschip, wobei die Antenne und der Kommunikationschip in dem Kunststoffgehäusekörper angeordnet sind, wobei der Kunststoffgehäusekörper eine im Wesentlichen ebene Oberseite, eine im Wesentlichen ebene Unterseite und einen die Oberseite und die Unterseite verbindenden Seitenbereich aufweist, und der Transponder zur Ausgabe einer Kennzeichnung ausgeführt ist, insbesondere für einen damit verbundenen Kunststoffbehälter.

Die vorliegende Erfindung betrifft zusätzlich ein Verfahren zum Herstellen eines obigen Transponders zur Kurzreichweitenkommunikation.

Die vorliegende Erfindung betrifft ebenfalls einen Kunststoffbehälter mit einem Behältervolumen, das von einer Behälterwand umgeben ist, wobei in der Behälterwand wenigstens eine Befüll- und/oder Entnahmeöffnung ausgebildet ist, und einem an der Behälterwand angebrachten obigen Transponder zur Kurzreichweitenkommunikation.

Die vorliegende Erfindung weiterhin ein Verfahren zum Herstellen eines Kunststoffbehälters mit einem Behältervolumen, das von einer Behälterwand umgeben ist, wobei in der Behälterwand wenigstens eine Befüll- und/oder Entnahmeöffnung ausgebildet ist, und einem an der Behälterwand angebrachten obigen Transponder zur Kurzreichweitenkommunikation.

Nachahmungen oder Fälschungen von Produkten werden aktuell zunehmend ein Problem für Originalhersteller von qualitativ hochwertigen und innovativen Produkten. Es entsteht ein enormer wirtschaftlicher Schaden, wenn beispielsweise von den Kunden günstige Nachahmungen oder Fälschungen gekauft werden, und der Originalhersteller keinen Gewinn erwirtschaften kann. Darüber hinaus kann auch ein Ruf oder eine Marke erheblich leiden, wenn die Kunden Fälschungen für Originalprodukte halten, und die schlechte Qualität der Nachahmungen oder Fälschungen auf den Originalhersteller zurückfällt.

Auch im medizinischen bzw. pharmazeutischen Bereich werden zunehmend Nachahmungen oder Fälschungen festgestellt, die über den wirtschaftlichen Schaden hinaus besteht hier eine Gefahr für die Gesundheit der Kunden.

Um die Produktsicherheit zu erhöhen, werden daher bereits verschiedene Arten von Kennzeichnungen für die Produkte verwendet. Dies ist bei in Kunststoffbehältern verpackten Waren, beispielsweise Flüssigkeiten, Nahrungsmittel, Pharmazeutika oder anderen teilweise schwierig, weil eine Anbringung der Kennzeichnung an den Waren nicht möglich oder nicht ausreichend ist. Darüber hinaus hat der Kunden ein Interesse, bereits vor dem Öffnen der Verpackung die Echtheit der Waren überprüfen zu können.

In diesem Zusammenhang sind beispielsweise sogenannten intelligente Kunststoffbehälter als Verpackungen bekannt. Diese enthalten beispielsweise an einer Behälterwand einen elektronischen Transponder. Diese Transponder können rein passiv aufgebaut sein und daher ohne eigene Energieversorgung auskommen, wodurch sie sehr kostengünstig, langlebig und auch unter schwierigen Umgebungsbedingungen verwendbar sind. Die Transponder enthalten eine Information, anhand derer die Echtheit des Kunststoffbehälters und damit auch von enthaltenen Waren überprüft werden kann. Der Transponder wird üblicherweise durch ein empfangenes Funksignal angeregt, diese Information als Teil eines gesendeten Funksignals zu übertragen. Solche passiven Transponder sind beispielsweise nach dem Standard Radio Frequency Identification (RFID) bekannt.

Für übliche Transponder sind dabei verschiedene Bauformen bekannt. So sind beispielsweise Transponder bekannt, die ein Glasröhrchen als Gehäuse aufweisen. Alternativ ist es bekannt, den Transponder als Plättchen bereitzustellen, wobei Antenne und Kommunikationschip in einer Epoxidharz Vergussmasse angeordnet sind. Diese Bauform ist für runde Plättchen als "coin" bekannt. Auch ist es bekannt, Antenne und Chip auf einer Trägerschicht, beispielsweise einer Klebefolie, anzubringen oder diese zwischen zwei Trägerschichten anzuordnen. Diese Bauformen werden je nach Anwendungsgebiet ausgewählt.

Bei der Herstellung von solchen Kunststoffbehältern werden beispielsweise Blasformverfahren verwendet.

Das Dokument DE 10 2008 058 353 B4 betrifft ein Verfahren zur Herstellung eines extrusionsblasgeformten Hohlkörpers aus thermoplastischem Kunststoff mit einem identifizierbaren Etikett, umfassend die Verfahrensschritte Plastifizieren von thermoplastischem Kunststoff, Extrudieren des plastifizierten Kunststoffs zu einem Vorformling und Aufweiten und Umformen des Vorformlings zu einem Hohlkörper in der ersten Hitze des Extrudats innerhalb eines mehrteiligen Blasformwerkzeugs wobei wenigstens ein Etikett auf den noch warmplastischen Vorformling außerhalb des Blasformwerkzeugs vor der Aufweitung und Umformung innerhalb des Blasformwerkzeugs aufgebracht wird. Als Etikett findet ein RFID oder ESA-Tag-Anwendung, welches zumindest aus einem mit dem Kunststoff des Hohlkörpers im Sinne einer Verschweißbarkeit kompatiblen Materials besteht. Es wird ein Steuersignal zur Aufbringung des Etiketts von einem Programm zur Wanddickensteuerung des Vorformlings erzeugt.

Für einen effizienten Ablauf der Herstellung solcher Kunststoffbehälter ist dabei die Anbringung der Transponder wichtig. Der Transponder wird beispielsweise an einem Magazin mit einem Vakuum-Saugnapf aufgenommen und in Position gebracht. Sobald ein kontinuierlich extrudierter Vorformling die Solllänge erreicht hat, wird der Transponder auf den Schlauch gedrückt, auf welchem er haften bleibt. Der Vorformling wird anschließend, zusammen mit dem aufgebrachten Transponder, im Blasformwerkzeug über einen Blasdorn aufgeblasen. Der so gebildete Kunststoffbehälter umfasst einen Verbund des Materials der Behälterwand und des Transponders, wodurch die intelligente Verpackung gebildet wird.

Auch ist es bekannt, bei Kunststoffbehältern einen solchen Transponder in einem Verschlusselement zum Verschließen seiner Befüll- und/oder Entnahmeöffnung anzubringen. Dabei kann ein Schutz vor Nachahmungen oder Fälschungen nur eingeschränkt gewährleistet werden, da sich ein zu schützendes Produkt in dem Kunststoffbehälter selber befindet. Der Schutz kann durch einen Wechsel des Verschlusselements mit einen Baugleichen mit einer "Scheinapplikation" umgangen werden.

Relevanter Stand der Technik ist im Dokument JP2006127141 zu finden.

Der vorliegenden Erfindung liegt die Aufgabe zugrunde, einen Transponder zur Kurzreichweitenkommunikation, ein Verfahren zum Herstellen eines solchen Transponders, einen Kunststoffbehälter mit einem Transponder zur Kurzreichweitenkommunikation und ein Verfahren zur Herstellung eines solchen Kunststoffbehälters bereitzustellen, die einen einfache Herstellung von qualitativ hochwertigen Kunststoffbehältern mit einem zuverlässigen Schutz vor Nachahmungen oder Fälschungen von Kunststoffbehältern und darin enthaltener Produkte ermöglichen.

Die der vorliegenden Erfindung zugrundeliegende Aufgabe wird durch einen Transponder zur Kurzreichweitenkommunikation mit den Merkmalen des Anspruchs 1 gelöst. Vorteilhafte Ausgestaltungen des Transponders zur Kurzreichweitenkommunikation sind in den von Anspruch 1 abhängigen Ansprüchen 2 bis 9 beschrieben.

Im Genaueren wird die der vorliegenden Erfindung zugrundeliegende Aufgabe durch einen Transponder zur Kurzreichweitenkommunikation mit einem Kunststoffgehäusekörper, einer Antenne und einem mit der Antenne elektrisch verbundenen Kommunikationschip, wobei die Antenne und der Kommunikationschip in dem Kunststoffgehäusekörper angeordnet sind, wobei der Kunststoffgehäusekörper eine im Wesentlichen ebene Oberseite, eine im Wesentlichen ebene Unterseite und einen die Oberseite und die Unterseite verbindenden Seitenbereich aufweist, und der Transponder zur Ausgabe einer Kennzeichnung ausgeführt ist, insbesondere für einen damit verbundenen Kunststoffbehälter, gelöst.

Der erfindungsgemäße Transponder ist dadurch gekennzeichnet, dass der Seitenbereich wenigstens in einem Abschnitt einen ersten Übergangsbereich aufweist, in dem sich der Seitenbereich in einer Höhenrichtung von der Unterseite zu der Oberseite von einem inneren Seitenwandbereich zu einem äußeren Seitenwandbereich nach außen erweitert, und der erste Übergangsbereich von dem inneren Seitenwandbereich zu dem äußeren Seitenwandbereich mit einer kontinuierlichen Formänderung des Seitenbereichs ausgeführt ist.

Der erfindungsgemäße Transponder weist eine Form auf, die eine besonders zuverlässige Verankerung des Transponders in einer Behälterwand eines in einem Blasformverfahren hergestellten Kunststoffbehälters ermöglicht. Die Ausgestaltung des Seitenbereichs in dem wenigstens in einem Abschnitt mit einem ersten Übergangsbereich, in dem sich der Seitenbereich in der Höhenrichtung von der Unterseite zu der Oberseite von dem inneren Seitenwandbereich zu dem äußeren Seitenwandbereich nach außen erweitert, stellt den Transponder mit wenigstens einer Verankerung bereit, die ein Entfernen des Transponders aus der Behälterwand nach dem Blasformprozess und insbesondere einen Austausch des Transponders durch einen anderen Transponder verhindert. Der Transponder kann nicht aus der Behälterwand herausfallen und wird sicher darin gehalten. Dies wird zusätzlich durch die kontinuierliche Formänderung in dem ersten Übergangsbereich erreicht, da die kontinuierliche Formänderung ermöglicht, dass das plastifizierte Kunststoffmaterial des Vorformlings den Seitenbereich gut umfließt und sich daran ohne Freiraum anschließt. Dies schließt insbesondere ein zuverlässiges Umfließen der so gebildeten wenigstens einen Verankerung von der Richtung der Unterseite des Transponders ein. Die Verankerung kann jeweils nach der Art von Widerhaken oder auch Hinterschnitten für eine Einbringung des Transponders in den Kunststoffbehälter ausgeführt sein.

Ein zusätzlicher Vorteil der Ausgestaltung des Seitenbereichs in dem wenigstens in einem Abschnitt mit einem ersten Übergangsbereich, in dem sich der Seitenbereich in der Höhenrichtung von der Unterseite zu der Oberseite von dem inneren Seitenwandbereich zu dem äußeren Seitenwandbereich nach außen erweitert, zusammen mit der kontinuierlichen Formänderung in dem ersten Übergangsbereich ergibt sich dadurch, dass der Transponder beim Umfließen durch das plastifizierte Kunststoffmaterial in Richtung einer Innenseite der Behälterwand gedrückt wird, also in die Behälterwand hinein. Dadurch kann beispielsweise eine Außenfläche der Behälterwand mit dem Transponder mit einem besonders glatten Übergang hergestellt werden. Die Behälterwand wird an ihrer Außenfläche ohne Erhebungen oder Kanten, die sonst durch den Transponder hervorgerufen werden könnten, bereitgestellt.

Der Transponder ist vorzugsweise nach der Art eines Plättchens ausgeführt, wobei Antenne und Chip in einer Epoxidharz Vergussmasse angeordnet sind. Diese Bauform ist für runde Plättchen als "coin" bekannt. Prinzipiell sind aber auch andere Formen für das Plättchen möglich.

Der Transponder weist einen insgesamt flachen Aufbau auf. In der Höhenrichtung von der Unterseite zu der Oberseite weist der Transponder eine geringere Erstreckung, typischerweise eine viel geringere Erstreckung, auf als in seinen Flächenrichtungen, d.h. entlang der Unterseite wie auch der Oberseite. Dabei sind die Unterseite und die Oberseite flach und mit einer im Wesentlichen ebenen Form ausgeführt. Ein Querschnitt des Kunststoffgehäusekörpers ist eine Schnittfläche üblicherweise parallel zu der Oberseite und der Unterseite bzw. umlaufend durch den Seitenbereich.

In einer Draufsicht auf den Transponder weisen der innere Seitenwandbereich und der äußere Seitenwandbereich eine teilweise Überlappung auf. Eine darüber hinausgehende Erstreckung des äußeren Seitenwandbereichs gibt die Erweiterung des äußeren Seitenwandbereichs gegenüber dem inneren Seitenwandbereich an.

Die Unterseite und die Oberseite können eine Wölbung aufweisen, die eine geringe Änderung der Dicke des Kunststoffgehäusekörpers bewirken können. Die Wölbung ist vorzugsweise als Bauch ausgeführt.

Der Kunststoffgehäusekörper kann an seiner Unterseite und an seiner Oberseite die gleiche Erstreckung aufweisen, d.h. der Querschnitt des Kunststoffgehäusekörpers an der Unterseite und der Oberseite ist gleich, beispielsweise quadratisch, rechteckig, kreisförmig, elliptisch, trapezförmig, oder eine beliebige Kombination davon.

Die Unterseite und die Oberseite können aber auch jeweils individuell eine prinzipiell beliebige Form aufweisen, beispielsweise quadratisch, rechteckig, kreisförmig, elliptisch, trapezförmig, oder eine beliebige Kombination davon. Zusätzlich können die Unterseite und die Oberseite an ihren Ecken abgerundet sein.

Der Seitenbereich läuft um den Kunststoffgehäusekörper in Umfangsrichtung seitlich herum und stellt eine umlaufende Verbindung zwischen der Oberseite und der Unterseite dar. Abhängig von der Form des Kunststoffgehäusekörpers kann der Seitenbereich beim einem kreisförmigen Querschnitt des Kunststoffgehäusekörpers beispielsweise eine einzige, umlaufende Seitenwand aufweisen, oder bei einem rechteckigen Querschnitt vier Seitenwände, die mit einem Winkel von 90° zueinander angeordnet sind.

Der wenigstens eine Abschnitt kann eine Seitenwand oder einen Teil davon umfassen. Der wenigstens eine Abschnitt kann auch mehrere Seitenwände gemeinsam ganz oder teilweise umfassen. Der erste Übergangsbereich erstreckt sich in dem Abschnitt in der Höhenrichtung zwischen dem inneren Seitenwandbereich und dem äußeren Seitenwandbereich. In Umfangsrichtung ist der erste Bereich durch eine entsprechende Ausdehnung des Abschnitts des Seitenbereichs definiert. Der Kunststoffgehäusekörper erfährt in den ersten Übergangsbereich eine Umfangsvergrößerung von dem inneren Seitenwandbereich zu dem äußeren Seitenwandbereich, wobei der Seitenbereich in anderen Bereichen davon andere Formänderungen erfahren kann.

Jeder der Seitenwandbereiche kann eine an sich beliebige Erstreckung in der Höhenrichtung aufweisen. Die Erstreckung der Seitenwandbereiche kann gegen Null gehen, d.h. es schließt sich unmittelbar eine weitere Formänderung des Seitenbereichs an dern entsprechenden Seitenwandbereich an.

Mehrere Abschnitte können identisch oder unterschiedlich ausgeführt sein, d.h. es kann mehrere identische Abschnitte geben, in denen sich der Seitenbereich in der Höhenrichtung von der Unterseite zu der Oberseite von einem inneren Seitenwandbereich zu einem äußeren Seitenwandbereich auf die gleiche Weise nach außen erweitert.

Auch kann der Seitenbereich mehrere Abschnitte aufweisen, in denen sich der Seitenbereich in der Höhenrichtung von der Unterseite zu der Oberseite von einem inneren Seitenwandbereich zu einem äußeren Seitenwandbereich auf unterschiedliche Weisen nach außen erweitert.

Dies kann jeweils eine Form und/oder Erstreckung, in der sich der Seitenbereich on dem inneren Seitenwandbereich zu dem äußeren Seitenwandbereich nach außen erweitert, wie auch einen Abstand von dem inneren Seitenwandbereich zu dem äußeren Seitenwandbereich oder eine Positionierung des inneren Seitenwandbereichs und des äußeren Seitenwandbereichs in der Höhenrichtung von der Unterseite zu der Oberseite betreffen. Beispielsweise können die Abschnitte bei einem kreisförmigen Kunststoffgehäusekörper eine unterschiedliche radiale Erstreckung oder eine unterschiedliche Form des Übergangsbereichs von dem inneren Seitenwandbereich zu dem äußeren Seitenwandbereich aufweisen.

Der Seitenbereich auch mehrere unterschiedliche Gruppen von Abschnitten mit jeweils gleichartigen Abschnitten aufweisen. Zusätzlich kann es einen oder mehrere andere Abschnitte geben, in denen sich der Seitenbereich in der Höhenrichtung von der Unterseite zu der Oberseite von einem inneren Seitenwandbereich zu einem zurückliegenden Seitenwandbereich reduziert. Dies erleichtert ein Umfließen mit plastifiziertem Kunststoffmaterial beim Blasformen.

Die kontinuierliche Formänderung des Seitenbereichs bedeutet, dass sich die Form des Seitenbereichs nicht sprunghaft ändert, beispielsweise bei einem Kunststoffgehäusekörper mit einem kreisförmigen Querschnitt nicht mit einer sprunghaften Änderung des Durchmessers entlang der Höhenrichtung. Durch die kontinuierliche Formänderung des Seitenbereichs wird die Ausgestaltung des Seitenbereichs mit Sprüngen, die beim Blasformen praktisch nicht zuverlässig mit dem plastifizierten Kunststoffmaterial ausgefüllt werden können, vermieden, so dass der Transponder zuverlässig in der Behälterwand verankert werden kann.

Auch ist es möglich, dass mehrere erste Übergangsbereiche in der Höhenrichtung hintereinander angeordnet sind. Dadurch kann der Seitenbereich in der Höhenrichtung von der Unterseite zu der Oberseite schrittweise nach außen erweitert werden. Dabei kann der äußere Seitenwandbereich eines der ersten Übergangsbereiche einen inneren Seitenwandbereich eines sich anschließenden ersten Übergangsbereichs bilden. Zwischen zwei ersten Übergangsbereichen kann der Seitenbereich eine prinzipiell beliebige Form aufweisen.

Der Transponder kann rein passiv aufgebaut sein und daher ohne eigene Energieversorgung auskommen, wodurch er sehr kostengünstig, langlebig und üblicherweise auch unter schwierigen Umgebungsbedingungen ausgeführt werden kann. Der Transponder enthält als Kennzeichnung eine Information, anhand derer die Echtheit des damit verbundenen Kunststoffbehälters und damit auch von enthaltenen Waren überprüft werden kann. Die Information ist beispielsweise in dem Kommunikationschip oder einem zugeordneten Speicherbaustein gespeichert. Der Transponder wird üblicherweise durch einen Empfang eines Funksignals angeregt, diese Information in einem Funksignal zu übertragen. Das anregende Funksignal und das Funksignal mit der Information werden über die Antenne übertragen. Solche passiven Transponder sind beispielsweise nach dem Standard Radio Frequency Identification (RFID) bekannt. Alternativ kann der Transponder als aktiver Transponder ausgeführt sein und zusätzlich eine elektrische Batterie als Energiequelle umfassen.

In einer vorteilhaften Ausgestaltung ist der erste Übergangsbereich von dem inneren Seitenwandbereich zu dem äußeren Seitenwandbereich mit einem konkaven Verlauf des Seitenbereichs, insbesondere mit einer konkaven Bogenform, oder mit einer geradlinigen Verbindung zwischen dem inneren Seitenwandbereich und dem äußeren Seitenwandbereich ausgeführt. Diese Ausgestaltung des ersten Übergangsbereichs ermöglicht eine besonders zuverlässige Verbindung des Transponders mit dem Kunststoffbehälter. Es erfolgt beim Blasformen des Kunststoffbehälters bei der Ausbildung der Behälterwand eine Anpassung des Vorformlings an die Form des Transponders, wobei dieser von dem plastifizierten Kunststoffmaterial des Vorformlings umflossen und nach dem Verfestigen der Behälterwand gehalten wird. Der konkave Verlauf definiert eine Verrundung des ersten Übergangsbereichs, der eine verbesserte Verteilung des plastifizierten Kunststoffmaterials entlang des Seitenbereichs ermöglicht. Auch wird eine Gefahr von Dünnstellen der Behälterwand im Bereich der Anbringung des Transponders verringert oder sogar eliminiert. Die geradlinige Verbindung betrifft eine Ausführung des ersten Übergangsbereichs nach der Art einer Fase, die mit unterschiedlichen Winkeln ausgeführt sein kann.

In einer vorteilhaften Ausgestaltung weist der Seitenbereich wenigstens in einem Abschnitt einen zweiten Übergangsbereich auf, in dem sich der Seitenbereich in der Höhenrichtung von der Unterseite zu der Oberseite von dem äußeren Seitenwandbereich zu einem zurückgezogenen Seitenwandbereich nach innen reduziert, und der zweite Übergangsbereich von dem äußeren Seitenwandbereich zu dem zurückgezogenen Seitenwandbereich ist mit einer kontinuierlichen Formänderung des Seitenbereichs ausgeführt. Der Seitenbereich erfährt also in der Höhenrichtung zunächst eine Erweiterung von dem inneren Seitenwandbereich zu dem äußeren Seitenwandbereich und anschließend eine Reduzierung von dem äußeren Seitenwandbereich zu dem zurückgezogenen Seitenwandbereich. Diese Ausgestaltung des Transponders bewirkt eine Reduzierung von Dünnstellen der Behälterwand, da sich das plastifizierte Kunststoffmaterial gut an den Transponder anpassen kann. Dies schließt ein zuverlässiges Umfließen des Transponders von seiner Oberseite ein, insbesondere ein Umfließen der wenigstens einen Verankerung von der Richtung der Oberseite des Transponders. Der zurückgezogene Seitenwandbereich ist prinzipiell unabhängig von dem inneren Seitenwandbereich, kann aber gleich ausgestaltet sein, d.h. der zurückgezogene Seitenwandbereich und der innere Seitenwandbereich überlappen ohne Überhang.

Der zweite Übergangsbereich, in dem sich der Seitenbereich in der Höhenrichtung von der Unterseite zu der Oberseite von dem äußeren Seitenwandbereich zu einem zurückgezogenen Seitenwandbereich nach innen reduziert, ist hier als Teil des Seitenbereichs definiert. Abhängig von seiner Ausgestaltung könnte der zweite Übergangsbereich als Verlängerung der Oberseite angesehen werden, wird aber dem Seitenbereich zugerechnet.

In einer vorteilhaften Ausgestaltung ist der zweite Übergangsbereich von dem äußeren Seitenwandbereich zu dem zurückgezogenen Seitenwandbereich mit einem konkaven Verlauf des Seitenbereichs, insbesondere mit einer konkaven Bogenform, oder mit einer geradlinigen Verbindung zwischen dem äußeren Seitenwandbereich und dem zurückgezogenen Seitenwandbereich ausgeführt. Die obigen Ausführungen in Bezug auf den ersten Übergangsbereich zwischen dem inneren und äußeren Seitenwandbereich gelten entsprechend.

In einer vorteilhaften Ausgestaltung erstreckt sich der Abschnitt mit dem ersten Übergangsbereich, in dem sich der Seitenbereich in der Höhenrichtung von der Unterseite zu der Oberseite von einem inneren Seitenwandbereich zu einem äußeren Seitenwandbereich nach außen erweitert, in Umfangsrichtung entlang des gesamten Seitenbereichs. Der Transponder ist also mit einem über den gesamten Seitenbereich umlaufenden inneren Seitenwandbereich und äußeren Seitenwandbereich ausgeführt. Es ergibt sich nicht nur eine lokale Änderung der Umfangsform in dem Abschnitt, sondern eine vollumfängliche. Insgesamt erfährt der Kunststoffgehäusekörper eine Querschnittsvergrößerung von dem inneren Seitenwandbereich zu dem äußeren Seitenwandbereich, wobei der innere Seitenwandbereich und der äußere Seitenwandbereich beispielsweise bei einer runden Form konzentrisch oder auch versetz angeordnet sein können. Entsprechendes gilt für andere Formen. Diese Ausgestaltung ermöglicht eine einfache Herstellung des Transponders und aufgrund der Erstreckung des ersten Übergangsbereichs über den gesamten Seitenbereich eine gute Verankerung in dem Kunststoffbehälter.

In einer vorteilhaften Ausgestaltung ist der äußere Seitenwandbereich an der Oberseite des Kunststoffgehäusekörpers ausgeführt, oder der zurückgezogene Seitenwandbereich ist an der Oberseite des Kunststoffgehäusekörpers ausgeführt. Die Oberseite des Kunststoffgehäusekörpers definiert somit die Form des äußeren Seitenwandbereichs bzw. des zurückgezogenen Seitenwandbereichs. Dabei kann sich der entsprechende Übergangsbereich unmittelbar an die Oberseite anschließen.

In einer vorteilhaften Ausgestaltung ist der innere Seitenwandbereich an der Unterseite des Kunststoffgehäusekörpers ausgeführt. Die Unterseite des Kunststoffgehäusekörpers definiert somit die Form des inneren Seitenwandbereichs. Dabei kann sich der Übergangsbereich unmittelbar an die Unterseite anschließen.

Bei einer Kombination davon erstrecken sich beispielsweise der innere und der äußere Seitenwandbereich zusammen mit dem ersten Übergangsbereich über die gesamte Höhe des Kunststoffgehäusekörpers. Alternativ kann erstrecken sich beispielsweise der innere und der äußere Seitenwandbereich sowie der zurückgezogene Seitenwandbereich zusammen mit dem ersten und zweiten Übergangsbereich über die gesamte Höhe des Kunststoffgehäusekörpers. In beiden Fällen wird eine gute Verankerung des Transponders in dem Kunststoffbehälter ermöglicht. Der erste Übergangsbereich bzw. die beiden Übergangsbereiche können jeweils geeignet ausgestaltet werden, um ein gutes Umfließen durch das plastifizierte Kunststoffmaterial sicherzustellen.

In einer vorteilhaften Ausgestaltung weist die Antenne eine ebene Ausgestaltung auf und ist parallel zu der Oberseite und/oder der Unterseite in dem Kunststoffgehäusekörper angeordnet, wobei die Antenne in der Höhenrichtung von der Unterseite zu der Oberseite in einer Höhe positioniert ist, in welcher der Kunststoffgehäusekörper den größten Querschnitt aufweist. Die Antenne ist somit in der Höhenrichtung dort in dem Kunststoffgehäusekörper angeordnet, wo dieser seinen größten Querschnitt aufweist. Dies betrifft typischerweise eine Position des äußeren Seitenwandbereichs in der Höhenrichtung. Eine besonders einfache Ausführung und Anordnung der Antenne ist möglich, wenn sich der äußere Seitenwandbereich in Umfangsrichtung über den gesamten Seitenbereich erstreckt. Besonders bei passiven Transpondern ist die Größe der Antenne wichtig, um eine zuverlässige Übertragung des anregenden Funksignals und des Funksignals mit der Information zu ermöglichen. Eine größere Antenne ermöglicht dabei eine erhöhte Aufnahme von Sendeenergie des anregenden Funksignals, wodurch das Übertragen des Funksignals mit der Information zuverlässig durchgeführt werden kann.

In einer vorteilhaften Ausgestaltung erweitert sich der äußere Seitenwandbereich gegenüber dem inneren Seitenwandbereich um eine Länge von weniger als einem Abstand zwischen der Unterseite und der Oberseite. Dies betrifft in einer Draufsicht auf den Transponder einen Überstand zwischen dem inneren und dem äußeren Seitenwandbereich, d.h. eine Länge des Überstands. In der Praxis hat sich herausgestellt, dass eine zu starke Erweiterung des äußeren Seitenwandbereichs gegenüber dem inneren Seitenwandbereich ein Umfließen des Seitenbereichs behindern kann. Dies ergibt sich beispielsweise daraus, dass der Vorformling zur Herstellung des Kunststoffbehälters üblicherweise eine einheitliche Materialstärke aufweist, die optimiert ist für die Behälterwand, d.h. zunächst ohne den Transponder. Wenn als zu viel plastifiziertes Kunststoffmaterial erforderlich ist zum Umfließen des Seitenbereichs, kann dies zu Dünnstellen der Behälterwand und damit zur Schwächung der Behälterwand führen.

Die der vorliegenden Erfindung zugrundeliegende Aufgabe wird zusätzlich durch ein Verfahren zum Herstellen eines obigen Transponders zur Kurzreichweitenkommunikation mit den Merkmalen des Anspruchs 10 gelöst.

Im Genaueren wird die der vorliegenden Erfindung zugrundeliegende Aufgabe zusätzlich durch ein Verfahren zum Herstellen eines obigen Transponders zur Kurzreichweitenkommunikation gelöst. Das Verfahren umfasst die Schritte Bereitstellen einer Gussform mit einem im Wesentlichen ebenen Bodenbereich und einem sich daran anschließenden Seitenbereich, wobei der Seitenbereich wenigstens in einem Abschnitt einen ersten Übergangsbereich aufweist, in dem sich der Seitenbereich von einem inneren Seitenwandbereich zu einem äußeren Seitenwandbereich nach außen erweitert, Gießen einer ersten Materialschicht in die Gussform, Positionieren einer Antenne und eines mit der Antenne elektrisch verbundenen Kommunikationschips auf der ersten Materialschicht, Gießen einer zweiten Materialschicht in die Gussform, welche sich mit der ersten Materialschicht zu einem Kunststoffgehäusekörper verbindet und zusammen mit der ersten Materialschicht die Antenne sowie den Kommunikationschip umschließt, Verfestigen der ersten Materialschicht, und Verfestigen der zweiten Materialschicht.

Die Gussform kann durch die angegebene Ausgestaltung des herzustellenden Transponders mit dem Übergangsbereich mit der kontinuierlichen Formänderung des Seitenbereichs einfach hergestellt werden. Das Gießen der Materialschichten kann diese Form des Transponders zuverlässig bereitstellen. Durch das angegebene Verfahren kann der Transponder auf einfache und kostengünstige Weise hergestellt werden. Die Gussform weist eine korrespondierende Negativform zu der angegebenen und gewünschten Form des Transponders auf.

Zum Gießen der zwei Materialschichten wird jeweils ein entsprechendes flüssiges bzw. fließfähiges Gussmaterial in die Gussform eingebracht. Dies kann durch Gießen oder Spritzgießen erfolgen. Das Gussmaterial ist vorzugsweise ein flüssiges oder plastifiziertes Kunststoffmaterial.

Das Verfestigen der ersten Materialschicht in der Gussform kann gemeinsam mit dem Verfestigen der zweiten Materialschicht durchgeführt werden, also nach dem Gießen der zweiten Materialschicht in die Gussform. Bei einer ausreichenden Oberflächenspannung der ersten Materialschicht nach dem Gießen können die Antenne und der Kommunikationschip darauf ohne vorherige Verfestigung der ersten Materialschicht positioniert werden. Ein unkontrolliertes Einsinken in die erste Materialschicht wird also durch die Oberflächenspannung der noch flüssigen ersten Materialschicht verhindert. Alternativ kann die erste Materialschicht bereits vor dem Positionieren der Antenne und des Kommunikationschips darauf verfestigt werden. Das Verfestigen der ersten und/oder zweiten Materialschicht umfasst zumindest ein teilweises Verfestigen der entsprechenden Materialschicht, beispielsweise an deren jeweiliger Außenfläche. So ist beispielsweise ein Entnehmen des Transponders aus der Gussform bereits möglich, sobald dieser zumindest an seiner Außenfläche hinreichend verfestigt ist, aber beispielsweise in einem Innenbereich noch nicht oder nicht vollständig verfestigt ist. Auch kann eine an ihrer Außenfläche verfestigte erste Materialschicht bereits ein zuverlässiges Positionieren der Antenne und des mit der Antenne elektrisch verbundenen Kommunikationschips ermöglichen. Dies gilt auch, wenn nur ein in der Gussform obenliegender und damit freier Teil der Außenfläche verfestigt ist, so dass die Antenne und der Kommunikationschip darauf positioniert werden können ohne die Gefahr eines unkontrollierten Einsinkens in die erste Materialschicht.

Das Verfestigen der ersten bzw. zweiten Materialschicht erfolgt beim Abkühlen der entsprechenden Materialschicht. Das Abkühlen kann rein passiv, d.h. ohne aktiven Wärmeabtransport, erfolgen. Vorzugsweise wird beim Verfestigen der ersten bzw. zweiten Materialschicht ein aktiver Wärmeabtransport über die Gussform oder über die Umgebungsluft durchgeführt, um das Verfestigen zu beschleunigen.

Die erste und zweite Materialschicht sind vorzugsweise aus dem selben Material hergestellt, insbesondere einem Kunststoffmaterial.

Durch das Gießen der zweiten Materialschicht in die Gussform, in der sich bereits die erste Materialschicht und die Antenne mit dem Kommunikationschip befinden, verbinden die die erste und die zweite Materialschicht zu dem Kunststoffgehäusekörper. Die erste und die zweite Materialschicht umschließen die Antenne sowie den Kommunikationschip unter Bildung des Kunststoffgehäusekörpers.

Dabei kann das Kunststoffmaterial der ersten und/oder der zweiten Materialschicht teilweise durch die Antenne bzw. darin ausgebildete Freiräume hindurchtreten oder diese zumindest teilweise ausfüllen.

Prinzipiell kann der Transponder mit weiteren Schichten hergestellt werden, die sich außenseitig an die erste oder zweite Materialschicht anschließen.

Der Transponder kann als aktiver Transponder ausgeführt sein und zusätzlich eine elektrische Batterie als Energiequelle umfassen. Diese ist bei der Herstellung des Transponders zusammen mit der Antenne und dem Kommunikationschip zu positionieren.

Vorzugsweise umfasst das Bereitstellen einer Gussform ein Bereitstellen eines Trägers mit einer Mehrzahl einzelner Gussformen, die bei dieser gemeinsamen Anordnung auch als Nutzen bezeichnet werden. Dadurch können mehrere Transponder parallel in den Nutzen hergestellt werden.

In einer vorteilhaften Ausgestaltung ist die Gussform als Silikonform ausgeführt. Die Silikonform ermöglicht ein einfaches und rückstandsfreies entnehmen des Transponders im Anschluss an das Gießen.

Die der vorliegenden Erfindung zugrundeliegende Aufgabe wird ebenfalls durch einen Kunststoffbehälter mit den Merkmalen des Anspruchs 11 gelöst.

Im Genaueren wird die der vorliegenden Erfindung zugrundeliegende Aufgabe ebenfalls durch einen Kunststoffbehälter mit einem Behältervolumen, das von einer Behälterwand umgeben ist, wobei in der Behälterwand wenigstens eine Befüll- und/oder Entnahmeöffnung ausgebildet ist, und einem an der Behälterwand angebrachten obigen Transponder zur Kurzreichweitenkommunikation gelöst. Der Kunststoffbehälter ist einteilig durch Blasformen eines aus einem extrudierten, plastifizierten Kunststoffmaterial hergestellten Vorformlings in einem Blasformwerkzeug hergestellt, und der Transponder ist an seiner Oberseite und seinem Seitenbereich von dem plastifizierten Kunststoffmaterial des Vorformlings umflossen und in der Behälterwand verankert.

Im Gegensatz zu den aus dem Stand der Technik bekannten Kunststoffbehältern kann der hier angegebene Kunststoffbehälter auf effiziente Weise in einem Blasformverfahren hergestellt werden, wobei gleichzeitig der Transponder in der Behälterwand gehalten ist. Durch die Form des Transponders und seine Anbringung an der Behälterwand wird eine zuverlässige Verbindung des Transponders mit dem Kunststoffbehälter erreicht, so dass der Transponder nur durch Zerstörung der Behälterwand daraus entnommen werden kann. Neben der Kennzeichnung des Kunststoffbehälters mit dem Transponder und der darin gespeicherten Kennzeichnung bzw. Information, die bereits einen guten Schutz bietet, kann durch eine einfache optische oder auch haptische Prüfung festgestellt werden, ob der Transponder entfernt oder sogar gegen einen anderen ausgetauscht worden ist. Die Zerstörung der Behälterwand geht typischerweise mit sicht- und fühlbaren Schäden einher.

Der Transponder weist eine Form auf, die eine besonders zuverlässige Verankerung des Transponders in der Behälterwand des in dem Blasformverfahren hergestellten Kunststoffbehälters ermöglicht. Durch die kontinuierliche Formänderung in dem ersten Übergangsbereich kann das plastifizierte Kunststoffmaterial des Vorformlings beim Blasformen den Seitenbereich gut umfließen, so dass eine zuverlässige Verankerung des Transponders in der Behälterwand gebildet wird.

Durch die Verwendung dieses Transponders zusammen mit dem Blasformverfahren ergibt sich als zusätzlicher Vorteil, dass eine Außenfläche der Behälterwand mit dem Transponder einen besonders glatten Übergang aufweisen kann. Die Behälterwand weist an ihrer Außenfläche keine Erhebungen oder Kanten, die sonst durch den Transponder hervorgerufen werden könnten, auf. Durch die Ausgestaltung des Seitenbereichs in dem wenigstens in einem Abschnitt mit einem ersten Übergangsbereich, in dem sich der Seitenbereich in der Höhenrichtung von der Unterseite zu der Oberseite von dem inneren Seitenwandbereich zu dem äußeren Seitenwandbereich nach außen erweitert, zusammen mit der kontinuierlichen Formänderung in dem ersten Übergangsbereich wird der Transponder in der Behälterwand derart von dem plastifizierten Kunststoffmaterial umflossen, dass der Transponder in Richtung einer Innenseite der Behälterwand gedrückt und so fixiert wird.

Bei einem typischen Kunststoffbehälter ist die Befüll- und/oder Entnahmeöffnung an dessen Oberseite angeordnet. Entsprechend kann die Behälterwand, in welcher der Transponder verankert ist, eine Seitenwand oder eine Bodenwand des Kunststoffbehälters sein. Die die Befüll- und/oder Entnahmeöffnung kann beispielsweise von einem Gewinde zur Anbringung einer Verschlusskappe umgeben sein.

In einer vorteilhaften Ausgestaltung ist der Transponder an einer Außenseite der Behälterwand positioniert, und die Unterseite des Transponders bildet einen Teil einer Außenfläche der Behälterwand bildet. Der Transponder kann an der Außenfläche der Behälterwand des Kunststoffbehälters sicht- und fühlbar sein und eine ebene Oberfläche mit dieser bilden, ohne dabei von dieser abzustehen und Erhebungen zu bilden, so dass der Kunststoffbehälter insgesamt ein einheitliches Aussehen aufweist. An der Oberseite des Transponders kann die Behälterwand somit eine ausreichende Materialstärke aufweisen, um eine strukturelle Integrität der Behälterwand sicherzustellen.

In einer vorteilhaften Ausgestaltung weist der Transponder eine Erstreckung in der Höhenrichtung von der Unterseite zu der Oberseite auf, die kleiner als eine Wandstärke der Behälterwand ist, vorzugsweise kleiner als 80% der Wandstärke der Behälterwand, besonders bevorzugt kleiner als 60% der Wandstärke der Behälterwand. Die Wandstärke der Behälterwand betrifft eine Wandstärke ohne den Transponder, beispielsweise in einem Bereich beabstandet von dem Transponder. Die Wandstärke der Behälterwand basiert auf einer Materialstärke des plastifizierten Kunststoffmaterials des Vorformlings und der Verteilung des plastifizierten Kunststoffmaterials beim Blasformen. Abhängig von der Erstreckung in der Höhenrichtung kann sich eine unterschiedliche Verteilung des plastifizierten Kunststoffmaterials des Vorformlings entlang des Transponders ergeben, wodurch auch Dünnstellen auftreten können. Bei einer homogenen Materialdicke des Vorformlings ist eine Anpassung im Bereich des Transponders nur eingeschränkt möglich, so dass eine Vermeidung der Dünnstellen durch die Verwendung eines Transponders mit einer reduzierten Erstreckung in der Höhenrichtung erzielt werden kann.

In einer vorteilhaften Ausgestaltung weist die Behälterwand wenigstens einen Wandabschnitt mit einer Biegung auf, der Transponder ist in diesem Wandabschnitt positioniert, und der Transponder weist in Richtung der Biegung eine Ausdehnung auf, die einem Winkelbereich von weniger als 20°, vorzugsweise weniger als 15°, besonders bevorzugt weniger als 10° einer Umfangsrichtung des Kunststoffbehälters entspricht. Wenn der Transponder jedoch eine gerade Oberseite und Unterseite aufweist, ergibt sich eine Formabweichung. Durch die Beschränkung der Größe des Transponders bezogen auf den Winkelbereich des Kunststoffbehälters wird sichergestellt, dass diese Formabweichung nicht zu groß wird, um die Gesamterscheinung des Kunststoffbehälters zu beeinträchtigen. Es ergibt sich nur eine geringfügige Abweichung von der Form der Behälterwand.

In einer vorteilhaften Ausgestaltung weist die Behälterwand wenigstens einen Wandabschnitt mit einer Biegung auf, der Transponder ist in diesem Wandabschnitt positioniert, und der Transponder ist an seiner Unterseite mit einer Biegung ausgeführt, die der Biegung der Behälterwand entspricht. Der Transponder ist also nicht vollständig eben an seiner Unterseite, sondern weist die Biegung als Anpassung an die Biegung des Wandabschnitts auf. Entsprechend ist der Transponder so ausgerichtet, das seine Biegung und die Biegung des Wandabschnitts in die gleiche Richtung laufen. Die Biegung der Unterseite des Transponders kann der Biegung des Wandabschnitts entsprechen, indem beide den gleichen Biegeradius aufweisen oder die Unterseite des Transponders einen geringfügig abweichenden Biegeradius aufweist, so dass zumindest eine Annäherung an eine Form der Behälterwand in dem Wandabschnitt erfolgt.

In beiden Fällen kann sich die Biegung in einer Flächenrichtung oder in zwei Flächenrichtungen der Behälterwand in dem Wandabschnitt erstrecken, d.h. der Kunststoffbehälter kann beispielsweise eine im Wesentlichen zylindrische Form aufweisen, oder zumindest teilweise eine Kugelform.

Der Kunststoffbehälter ist vorzugsweise in Umfangsrichtung mit einem kreisförmigen oder ovalen Querschnitt ausgeführt. Der Kunststoffbehälter kann zusätzlich gerade Wandabschnitte aufweisen. Es wird insgesamt ein Kunststoffbehälter gebildet, der in Umfangsrichtung keine Kanten aufweist. Ein solcher Kunststoffbehälter ist gut für die Herstellung in einem Blasformverfahren geeignet.

Die der vorliegenden Erfindung zugrundeliegende Aufgabe wird auch durch ein Verfahren zum Herstellen eines Kunststoffbehälters mit den Merkmalen des Anspruchs 16 gelöst.

Im Genaueren wird die der vorliegenden Erfindung zugrundeliegende Aufgabe auch durch ein Verfahren zum Herstellen eines Kunststoffbehälters mit einem Behältervolumen, das von einer Behälterwand umgeben ist, wobei in der Behälterwand wenigstens eine Befüll- und/oder Entnahmeöffnung ausgebildet ist, und einem an der Behälterwand angebrachten obigen Transponder zur Kurzreichweitenkommunikation in einem Blasformprozess gelöst. Das Verfahren umfasst die Schritte Plastifizieren von thermoplastischem Kunststoffmaterial, Extrudieren des plastifizierten Kunststoffmaterials zu einem Vorformling, Positionieren des Transponders an einer Außenseite des Vorformlings, und Aufweiten und Umformen des Vorformlings zu dem Kunststoffbehälter innerhalb eines Blasformwerkzeugs, wobei der Transponder an seiner Oberseite und seinem Seitenbereich von dem plastifizierten Kunststoffmaterial umflossen und in der Behälterwand verankert wird.

Das Plastifizieren des thermoplastischen Kunststoffmaterials umfasst ein Erwärmen des thermoplastischen Kunststoffmaterials, so dass dieses eine fließfähige Form annimmt und extrudiert werden kann.

Beim Extrudieren des plastifizierten Kunststoffmaterials zu einem Vorformling wird der Vorformling typischerweise als Schlauch bereitgestellt, der auf eine korrekte Länge zurechtgeschnitten ist. Der Vorformling weist beispielsweise eine homogene Materialstärke des plastifizierten Kunststoffmaterials auf, wobei die Materialstärke beim Extrudieren auch variiert werden kann

Beim Positionieren des Transponders an einer Außenseite des Vorformlings erfolgt eine gewünschte Positionierung, so dass der Transponder in dem hergestellten Kunststoffbehälter korrekt positioniert ist. Der Transponder wird dabei derart positioniert, dass seine Oberseite mit dem Vorformling in Anlage kommt.

Das Aufweiten und Umformen des Vorformlings zu dem Kunststoffbehälter innerhalb eines Blasformwerkzeugs erfolgt typischerweise durch Gaszufuhr unter Druck in den Vorformling, wobei das Aufweiten durch eine innere Form des Blasformwerkzeugs begrenzt wird. Das Blasformwerkzeug ist typischerweise ein mehrteiliges Werkzeug, dessen innere Form eine Außenfläche des Kunststoffbehälters definiert. Die Gaszufuhr kann über einen Blasdorn erfolgen.

In einer vorteilhaften Ausgestaltung umfasst das Positionieren des Transponders an einer Außenseite des Vorformlings ein Anhaften des Transponders an dem Vorformling außerhalb des Blasformwerkzeugs vor dem Aufweiten und Umformen des Vorformlings zu dem Kunststoffbehälter innerhalb des Blasformwerkzeugs. Die Herstellung des Kunststoffbehälters kann somit besonders effizient durchgeführt werden, da das Blasformwerkzeug beispielsweise nicht durch ein Positionieren des Transponders darin für eine andere Verwendung, beispielsweise zum Einbringen des Vorformlings, blockiert ist. Nach dem Extrudieren des plastifizierten Kunststoffmaterials zu dem Vorformling befindet sich der Vorformling vorzugsweise zunächst außerhalb des Blasformwerkzeugs, so dass in diesem Stadium der Transponder auf einfach Weise daran angehaftet werden kann. Dabei kann der Transponder mit einer zusätzlichen Haftschicht an dem Vorformling angehaftet werden. Aufgrund des plastifizierten Zustands des Kunststoffmaterials des Vorformlings kann der Transponder auch unmittelbar daran angehaftet werden. Beim Anhaften des Transponders kann dieser zumindest teilweise in den Vorformling eingedrückt werden.

In einer vorteilhaften Ausgestaltung umfasst das Positionieren des Transponders an einer Außenseite des Vorformlings ein Positionieren des Transponders in dem mehrteiligen Blasformwerkzeug vor einem Einbringen des Vorformlings zum Aufweiten und Umformen zu dem Kunststoffbehälter innerhalb des mehrteiligen Blasformwerkzeugs. Der Transponder wird also vor dem Vorformling in das Blasformwerkzeug eingebracht. Der Transponder kommt beim Aufweiten und Umformen des Vorformlings mit diesem in Kontakt und wird von dem Kunststoffmaterial des Vorformlings an seiner Oberseite und seinem Seitenbereich umflossen und in der Behälterwand verankert.

Die Merkmale wie auch die Vorteile, die oben in Bezug auf den Transponder, das Verfahren zum Herstellen des Transponders, den Kunststoffbehälter und das Verfahren zum Herstellen des Kunststoffbehälters beschrieben sind, gelten entsprechend für alle beschriebenen Vorrichtungen und Verfahren. Merkmale können zwischen den Vorrichtungen und Verfahren entsprechend übertragen werden. Bei den beschriebenen Verfahren können die Abläufe der beschriebenen Verfahrensschritte variieren, wie sich für den Fachmann offensichtlich ergibt. Einzelne Verfahrensschritte können mitunter parallel durchgeführt werden.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Darstellung eines erfindungsgemäßen Kunststoffbehälters mit einem Behältervolumen, das von einer Behälterwand umgeben ist, wobei in der Behälterwand eine Befüll- und/oder Entnahmeöffnung ausgebildet ist, an der Behälterwand ein Transponder zur Kurzreichweitenkommunikation angebracht ist gemäß einer ersten, bevorzugten Ausführungsform der vorliegenden Erfindung;
- Figur 2:: eine teilweise Darstellung des Transponders aus Fig. 1 in der Behälterwand des Kunststoffbehälters in einer schematischen Schnittansicht;
- Figur 3:: eine Darstellung des Transponders aus Fig. 1 mit einer beispielhaften Bemaßung in einer Draufsicht;
- Figur 4:: eine Darstellung des Transponders aus Fig. 1 mit einer beispielhaften Bemaßung in einer Seitenansicht;
- Figur 5:: eine teilweise Darstellung des Transponders aus Fig. 1 mit darin angeordneter Antenne und Kommunikationschip in einer schematischen Schnittansicht; und
- Figur 6:: eine Darstellung einer Vorrichtung zum Extrudieren eines Vorformlings zur Herstellung des Kunststoffbehälters aus Fig. 1 und zum Anhaften des Transponders aus Fig. 1 in Übereinstimmung mit der ersten Ausführungsform.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

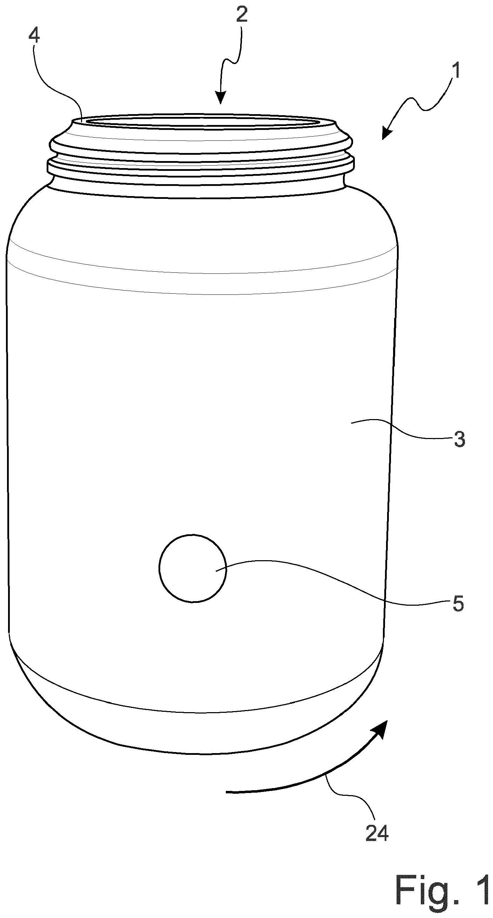

Figur 1 zeigt einen erfindungsgemäßen Kunststoffbehälters 1 gemäß einer ersten, bevorzugten Ausführungsform.

Der Kunststoffbehälter 1 umfasst ein Behältervolumen 2, das von einer Behälterwand 3 umgeben ist. Der Kunststoffbehälter 1 umfasst weiterhin eine Befüll- und/oder Entnahmeöffnung 4, die in der Behälterwand 3 ausgebildet ist. An der Behälterwand 3 ist ein Transponder 5 zur Kurzreichweitenkommunikation angebracht.

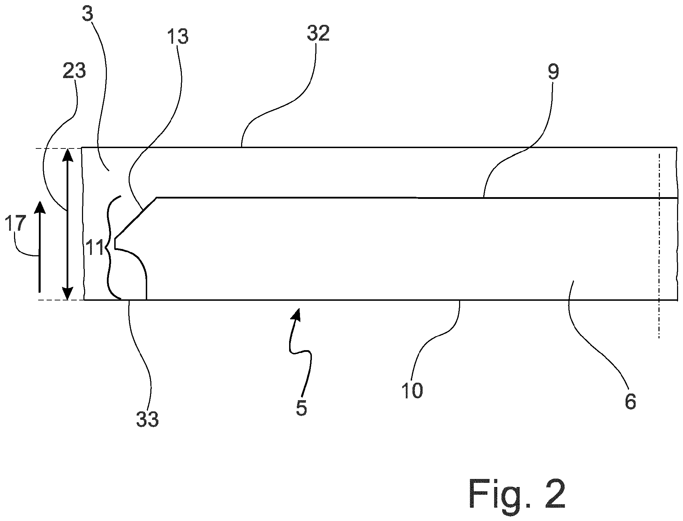

Der Transponder 5 ist in den Figuren 2 bis 4 im Detail dargestellt. Der Transponder 5 ist rein passiv aufgebaut.

Der Transponder umfasst einen Kunststoffgehäusekörper 6, in dem eine Antenne 7 und ein mit der Antenne 7 elektrisch verbundener Kommunikationschip 8 angeordnet sind. Die Antenne 7 weist eine ebene Ausgestaltung auf.

Der Transponder 5 ist zur Ausgabe einer Kennzeichnung ausgeführt für den damit verbundenen Kunststoffbehälter 1 ausgeführt. Der Transponder 5 enthält als Kennzeichnung eine Information, anhand derer die Echtheit des Kunststoffbehälters 1 und damit auch von enthaltenen Waren überprüft werden kann. Die Information ist in dem Transponder 5, hier in einem nicht dargestellten Speicherbaustein, der dem Kommunikationschip 8 zugeordnet ist, gespeichert. Der Transponder 5 wird üblicherweise durch den Empfang eines entsprechenden Funksignals über die Antenne 7 angeregt, diese Information in einem Funksignal über die Antenne 7 zu übertragen. Der Transponder 5 ist hier beispielhaft nach dem Standard Radio Frequency Identification (RFID) ausgeführt.

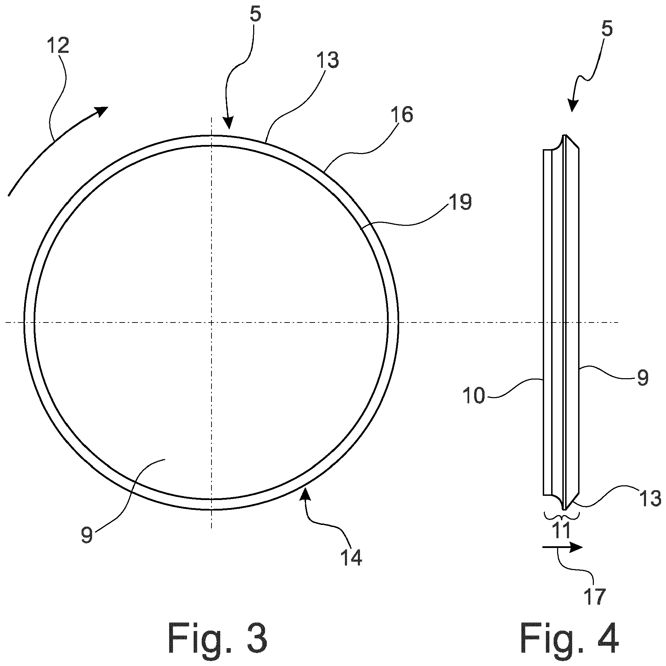

Der Kunststoffgehäusekörper 6 weist eine im Wesentlichen ebene Oberseite 9, eine im Wesentlichen ebene Unterseite 10 und einen die Oberseite 9 und die Unterseite 10 verbindenden Seitenbereich 11 auf. Insgesamt ist der Transponder 5 nach der Art eines runden Plättchens ausgeführt. Diese Bauform ist auch als "coin" bekannt. Entsprechend läuft der Seitenbereich 11 um den Kunststoffgehäusekörper 6 seitlich in Umfangsrichtung 12 herum und stellt eine umlaufende Verbindung zwischen der Oberseite 9 und der Unterseite 10 dar. Der Seitenbereich 11 ist hier mit einer einzigen, umlaufenden Seitenwand 13 ausgeführt, wie beispielsweise in Figur 3 gezeigt.

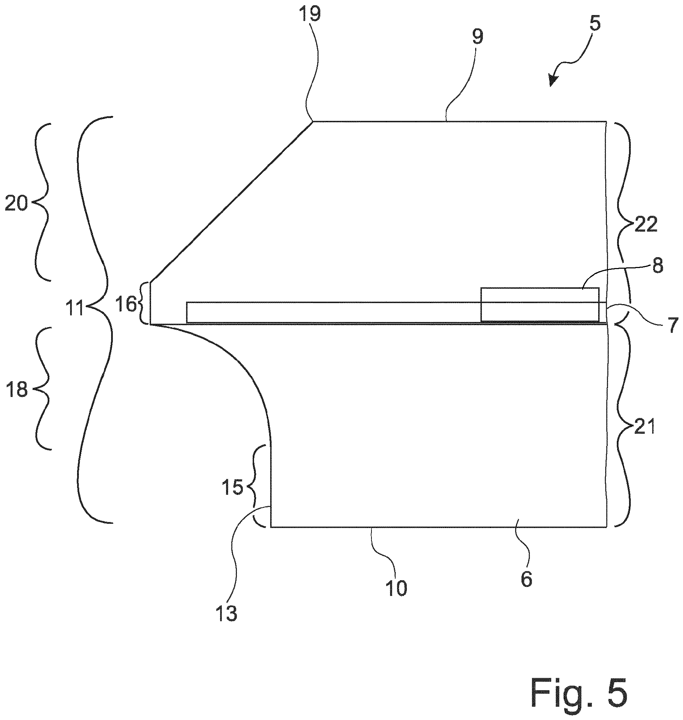

Der Transponder 5 weist vorliegend einen Abschnitt 14 auf, der die gesamte Seitenwand 13 umfasst. Über den Abschnitt 14 erstrecken sich ein innerer Seitenwandbereich 15 und ein äußerer Seitenwandbereich 16, wobei der Kunststoffgehäusekörper 6 auf einer Höhe des inneren Seitenwandbereichs 15 einen kleineren Durchmesser aufweist als auf einer Höhe des äußeren Seitenwandbereichs 16. Der innere Seitenwandbereich 15 und der äußere Seitenwandbereich 16 sind in einer Höhenrichtung 17 von der Unterseite 10 zu der Oberseite 9 des Kunststoffgehäusekörpers 6 in dieser Reihenfolge beabstandet angeordnet. Dabei ist der innere Seitenwandbereich 15 an der Unterseite 10 des Kunststoffgehäusekörpers 6 ausgeführt. Die Unterseite 10 des Kunststoffgehäusekörpers 6 definiert somit die Form des inneren Seitenwandbereichs 15. Wie sich aus Figur 5 ergibt, ist die Antenne 7 parallel zu der Oberseite 9 und der Unterseite 10 in dem Kunststoffgehäusekörper 6 in der Höhenrichtung 17 in einer Höhe des äußeren Seitenwandbereichs 16 positioniert.

Zwischen dem inneren Seitenwandbereich 15 und dem äußeren Seitenwandbereich 16 weist der Seitenbereich 11 einen ersten Übergangsbereich 18 aufweist, in dem sich der Seitenbereich 11 in der Höhenrichtung 17 von dem inneren Seitenwandbereich 15 zu dem äußeren Seitenwandbereich 16 nach außen erweitert. Der erste Übergangsbereich 18 ist mit einer kontinuierlichen Formänderung des Seitenbereichs 11 von dem inneren Seitenwandbereich 15 zu dem äußeren Seitenwandbereich 16 ausgeführt. In dem ersten Übergangsbereich 18 erfährt der Kunststoffgehäusekörper 6 somit eine Umfangsvergrößerung von dem inneren Seitenwandbereich 15 zu dem äußeren Seitenwandbereich 16. Im Detail weist der erste Übergangsbereich 18 von dem inneren Seitenwandbereich 15 zu dem äußeren Seitenwandbereich 16 einen konkaven Verlauf mit einer konkaven Bogenform des Seitenbereichs 11 auf. Der konkave Verlauf definiert eine Verrundung des ersten Übergangsbereichs 18.

Zusätzlich erstreckt sich ein zurückgezogener Seitenwandbereich 19 über den Abschnitt 14. Der Kunststoffgehäusekörper 6 weist auf einer Höhe des zurückgezogenen Seitenwandbereichs 19 einen kleineren Durchmesser auf als auf einer Höhe des inneren und äußeren Seitenwandbereichs 15, 16. Der zurückgezogene Seitenwandbereich 19 ist in der Höhenrichtung 17 von der Unterseite 10 zu der Oberseite 9 des Kunststoffgehäusekörpers 6 beabstandet oberhalb des äußere Seitenwandbereichs 16 angeordnet, und zwar an der Oberseite 9 des Kunststoffgehäusekörpers 6. Die Oberseite 9 des Kunststoffgehäusekörpers 6 definiert somit die Form des zurückgezogenen Seitenwandbereichs 19.

Zwischen dem äußeren Seitenwandbereich 16 und dem zurückgezogenen Seitenwandbereich 19 weist der Seitenbereich 11 einen zweiten Übergangsbereich 20 auf, in dem sich der Seitenbereich 11 in der Höhenrichtung 17 von dem äußeren Seitenwandbereich 16 zu dem zurückgezogenen Seitenwandbereich 19 nach innen verringert. Der zweite Übergangsbereich 20 schließt sich unmittelbar an die Oberseite 9 an und ist mit einer kontinuierlichen Formänderung des Seitenbereichs 11 von dem äußeren Seitenwandbereich 16 zu dem zurückgezogenen Seitenwandbereich 19 ausgeführt. In dem zweiten Übergangsbereich 20 erfährt der Kunststoffgehäusekörper 6 somit eine Umfangsverringerung von dem äußeren Seitenwandbereich 16 zu dem zurückgezogenen Seitenwandbereich 19.

Im Detail weist der zweite Übergangsbereich 20 eine geradlinige Verbindung von dem äußeren Seitenwandbereich 16 zu dem zurückgezogenen Seitenwandbereich 19 auf. Die geradlinige Verbindung betrifft eine Ausführung des zweiten Übergangsbereichs 20 nach der Art einer Fase, die hier mit einem Winkel von 45° ausgeführt ist.

Der Transponder 5 weist dabei einen insgesamt flachen Aufbau auf. In der Höhenrichtung 17 weist der Transponder 5 eine Erstreckung in diesem Ausführungsbeispiel eine Erstreckung von 1 mm auf, während der Transponder 5 auf Höhe des äußeren Seitenwandbereichs 16 einen Durchmesser von 10,6 mm und an der Oberseite 9 auf Höhe des zurückgezogenen Seitenwandbereichs 19 einen Durchmesser von 10 mm auf. Der Kunststoffgehäusekörper 6 weist somit auf der Höhe des äußeren Seitenwandbereichs 16 den größten Querschnitt auf. Dabei erweitert sich der Kunststoffgehäusekörper 6 von dem inneren Seitenwandbereich 15 zu dem äußeren Seitenwandbereich 16 um eine Länge, die kleiner als die Höhe des Kunststoffgehäusekörpers 6 ist.

Wie sich aus Figur 2 ergibt, weist der Transponder eine Erstreckung in der Höhenrichtung 17 auf, die kleiner als 80% der Wandstärke 23 der Behälterwand 3 ist. Die Wandstärke 23 der Behälterwand 1 betrifft eine Wandstärke 23 ohne den Transponder 5.

Wie sich aus Figur 1 ergibt, weist der Kunststoffbehälter 1 einen runden Querschnitt auf. Entsprechend ist die Behälterwand insgesamt mit einer Biegung ausgeführt, wodurch der Transponder 5 im Bereich dieser Biegung positioniert ist. Die Biegung erstreckt sich hier in nur einer Flächenrichtung der Behälterwand 3, wodurch der Kunststoffbehälter 1 eine im Wesentlichen zylindrische Form aufweist. Wie weiter in Figur 1 dargestellt ist, weist der Transponder 5 in Richtung der Biegung eine Ausdehnung auf, die einem Winkelbereich von weniger als 20°, insbesondere weniger als 15° einer Umfangsrichtung 24 des Kunststoffbehälters 1 entspricht.

Nachstehend wird die Herstellung des Transponders 5 beschrieben.

Das Verfahren beginnt mit einem Bereitstellen einer Gussform. Die Gussform ist als Silikonform ausgeführt und weist eine korrespondierende Negativform zu der Form des Kunststoffgehäusekörpers 6 des Transponders 5 auf.

Dann wird eine erste Materialschicht 21 in die Gussform gegossen. Die erste Materialschicht 21 wird verfestigt, d.h. sie kühlt in der Gussform ab, bis zumindest eine Außenfläche davon verfestigt ist. Die erste Materialschicht 21 erstreckt sich dabei von der Unterseite 10 bis zu einer Höhe des äußeren Seitenwandbereichs 16.

Anschließend werden die Antenne 7 und der mit der Antenne 7 elektrisch verbundene Kommunikationschip 8 auf der ersten Materialschicht 21 positioniert. Entsprechend kommen die Antenne 7 und der Kommunikationschip 8 in dem äußeren Seitenwandbereich 16 zu liegen.

Weiter wird eine zweite Materialschicht 22 in die Gussform gegossen, die sich mit der ersten Materialschicht 21 zu dem Kunststoffgehäusekörper 6 verbindet und zusammen mit der ersten Materialschicht 21 die Antenne 7 sowie den Kommunikationschip 8 umschließt. Dabei kann das Kunststoffmaterial der ersten und insbesondere der zweiten Materialschicht 21, 22 teilweise durch die Antenne 7 bzw. darin ausgebildete, hier nicht dargestellte Freiräume hindurchtreten. Die Gussform wird mit der zweiten Materialschicht bis zur Oberseite 9 der herzustellenden Transponders 5 gefüllt.

Schließlich erfolgt ein Verfestigen der zweiten Materialschicht 22. Die zweite Materialschicht 22 kühlt entsprechend in der Gussform ab, bis zumindest eine Außenfläche davon verfestigt ist.

Danach kann der so hergestellte Transponder 5 aus der Gussform entnommen werden.

Zum Gießen der zwei Materialschichten 21,22 wird jeweils ein entsprechendes flüssiges bzw. fließfähiges Gussmaterial in die Gussform eingebracht. Das Gussmaterial ist jeweils das gleiche flüssige oder plastifizierte Kunststoffmaterial. Entsprechend sind die erste und die zweite Materialschicht 21, 22 aus demselben Kunststoffmaterial hergestellt, so dass der Kunststoffgehäusekörper 6 eine einheitliche Struktur aufweist.

Das Verfestigen der ersten bzw. zweiten Materialschicht 21, 22 erfolgt durch ein Abkühlen der entsprechenden Materialschicht 21, 22. Das Abkühlen erfolgt rein passiv ohne aktiven Wärmeabtransport.

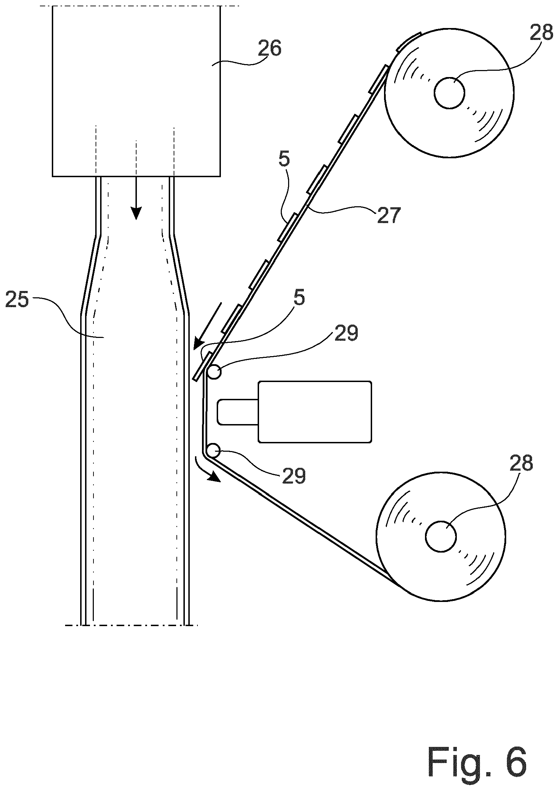

Nachfolgend wird ein Verfahren zum Herstellen des Kunststoffbehälters 1 unter zusätzlichem Bezug auf Figur 6 beschrieben. Der Kunststoffbehälter 1 ist hier als einteiliger Kunststoffbehälter 1 durch Blasformen gefertigt, wie nachstehend im Detail beschrieben ist.

Das Verfahren beginnt mit einem Plastifizieren von thermoplastischem Kunststoffmaterial. Dazu wird Kunststoffgranulat in einem hier nicht dargestellten Schneckenextruder auf an sich bekannte Weise plastifiziert. Das Plastifizieren des thermoplastischen Kunststoffmaterials umfasst ein Erwärmen des thermoplastischen Kunststoffmaterials.

Es schließt sich ein Extrudieren des plastifizierten Kunststoffmaterials zu einem Vorformling 25 an. Im Detail wird Vorformling 25 mittels eines Extrusionskopfes 26 in Schwerkraftrichtung als Schlauch extrudiert. Dazu wird das plastifizierte, thermoplastische Kunststoffmaterial dem Extrusionskopf 26 zugeführt. Innerhalb des Extrusionskopfes 26 wird das plastifizierte, thermoplastische Kunststoffmaterial über eine Ringspaltdüse zu dem schlauchförmigen Vorformling 25 ausgestoßen. Über eine Verstellung der Spaltbreite der Ringspaltdüse sowie über Zentrierung und/oder Dezentrierung eines Dorns innerhalb des Extrusionskopfs 26 kann während der Extrusion eine radiale und/oder axiale Wanddickensteuerung durchgeführt werden. Es kann kontinuierlich oder diskontinuierlich Extrusion der Vorformlinge 25 mit einem sogenannten Speicherkopf erfolgen.

Es folgt ein Schritt zum Positionieren des Transponders 5 an einer Außenseite des Vorformlings 25 außerhalb eines Blasformwerkzeugs vor dem Aufweiten und Umformen des Vorformlings 25 zu dem Kunststoffbehälter 1 innerhalb des Blasformwerkzeugs.

Zur Aufbringung und zum Anhaften des Transponders 5 ist in diesem Ausführungsbeispiel eine Aufbringungsvorrichtung 27 vorgesehen, die zwischen dem Extrusionskopf 26 und dem nicht dargestellten Blasformwerkzeug positioniert ist. Die Aufbringungsvorrichtung 27 umfasst Transport- und Spannrollen 28 sowie Umlenkrollen 29, über die ein Trägerband 30 mit den darauf angeordneten Transpondern 5 geführt ist. Das Trägerband 30 ist auf eine der Transport- und Spannrollen 28 aufgewickelt und wird während des Betriebs der Aufbringungsvorrichtung 27 von dieser auf die andere Transport- und Spannrolle 28 umgespult. Dabei wird das Trägerband 30 mittels der Umlenkrollen 29 so umgelenkt, dass die Transponder 5 teilweise parallel zu dem Vorformling 25 auf dem Trägerband 30 geführt werden. Die Transponder 5 können adhäsiv auf dem Trägerband 30 angeordnet sein, wobei die Haftkraft eines auf dem Trägerband 30 vorgesehenen Haftvermittlers verhältnismäßig gering sein kann.

Wie weiter in Figur 6 dargestellt ist, wird der Transponder 5 mittels eines Stempels 31, der hydraulisch oder pneumatisch betätigt sein kann, gegen den Vorformling 25 gedrückt und daran angehaftet. Dabei kann der Transponder 5 mit einer zusätzlichen Haftschicht an dem Vorformling 25 angehaftet werden. Alternativ kann der Transponder 5 aufgrund des plastifizierten Zustands des Kunststoffmaterials des Vorformlings 25 unmittelbar daran angehaftet werden.

Bei einer alternativen Aufbringungsvorrichtung 27 sind die Transponder 5 in einem Magazinspender magaziniert und bevorratet, und werden aus dem Magazinspender an dem Vorformling 25 angehaftet.

Schließlich erfolgt ein Aufweiten und Umformen des Vorformlings 25 zu dem Kunststoffbehälter 1 innerhalb des Blasformwerkzeugs, wobei der Transponder 5 an seiner Oberseite 9 und seinem Seitenbereich 11 von dem plastifizierten Kunststoffmaterial umflossen und in der Behälterwand 3 verankert wird.

Dazu wird der noch an dem Extrusionskopf 26 hängende Vorformling 25 unterhalb des Extrusionskopfes 26 in dem mehrteiligen Blasformwerkzeug aufgenommen. Das Blasformwerkzeug schließt sich um den Vorformling 25, woraufhin der Vorformling 25 innerhalb einer von dem mehrteiligen Blasformwerkzeug gebildeten Kavität mittels Differenzdruck aufgeweitet und umgeformt wird.

Dabei umfließt das plastifizierte Kunststoffmaterial des Vorformlings 25 an seiner Oberseite 9 und dem Seitenbereich 11. Durch die Ausgestaltung des Seitenbereichs 11 mit dem ersten Übergangsbereich 18, in dem sich der Seitenbereich 11 in der Höhenrichtung 17 von der Unterseite 10 zu der Oberseite 11 des Kunststoffgehäusekörpers 6 von dem inneren Seitenwandbereich 15 zu dem äußeren Seitenwandbereich 16 nach außen erweitert und die in dem ersten Übergangsbereich 18 erfolgende kontinuierlichen Formänderung des Seitenbereichs 11, wird der Transponder 5 beim Umfließen durch das plastifizierte Kunststoffmaterial in Richtung einer Innenfläche 32 der Behälterwand 3 gedrückt wird, also in die Behälterwand 3 hinein. Dadurch bildet der Transponder 5, der an einer Außenseite 33 der Behälterwand 3 positioniert ist, mit einem glatten Übergang von seiner Unterseite 11 zu der Außenfläche 33 der Behälterwand 3.

Gleichzeitig mit oder anschließend an das Blasformen in dem Blasformwerkzeug wird der Vorformling 25 mittels einer Schlauchtrennvorrichtung zwischen dem Blasformwerkzeug und dem Extrusionskopf 26 abgetrennt. Danach wird das Blasformwerkzeug geöffnet und der fertige Kunststoffbehälter 1 wird aus dem Blasformwerkzeug entnommen. An dem Kunststoffbehälter 1 vorhandene Butzen (Flash) werden entfernt.

### Bezugszeichenliste

- 1: Kunststoffbehälter
- 2: Behältervolumen
- 3: Behälterwand
- 4: Befüll- und/oder Entnahmeöffnung
- 5: Transponder
- 6: Kunststoffgehäusekörper
- 7: Antenne
- 8: Kommunikationschip
- 9: Oberseite
- 10: Unterseite
- 11: Seitenbereich
- 12: Umfangsrichtung (Kunststoffgehäusekörper)
- 13: Seitenwand
- 14: Abschnitt
- 15: innerer Seitenwandbereich
- 16: äußerer Seitenwandbereich
- 17: Höhenrichtung (Kunststoffgehäusekörper)
- 18: erster Übergangsbereich
- 19: zurückgezogener Seitenwandbereich
- 20: zweiter Übergangsbereich
- 21: erste Materialschicht
- 22: zweite Materialschicht
- 23: Wandstärke
- 24: Umfangsrichtung (Kunststoffbehälter)
- 25: Vorformling
- 26: Extrusionskopf
- 27: Aufbringungsvorrichtung
- 28: Transport- und Spannrollen
- 29: Umlenkrollen
- 30: Trägerband
- 31: Stempel
- 32: Innenfläche
- 33: Außenseite

## Patentansprüche

1. Transponder (5) zur Kurzreichweitenkommunikation mit einem Kunststoffgehäusekörper (6), einer Antenne (7) und einem mit der Antenne (7) elektrisch verbundenen Kommunikationschip (8), wobei die Antenne (7) und der Kommunikationschip (8) in dem Kunststoffgehäusekörper (6) angeordnet sind, wobei
der Kunststoffgehäusekörper (6) eine im Wesentlichen ebene Oberseite (9), eine im Wesentlichen ebene Unterseite (10) und einen die Oberseite (9) und die Unterseite (10) verbindenden Seitenbereich (11) aufweist, und
der Transponder (5) zur Ausgabe einer Kennzeichnung ausgeführt ist, insbesondere für einen damit verbundenen Kunststoffbehälter (1),
wobei der Transponder (5) **dadurch gekennzeichnet ist, dass**
der Seitenbereich (11) wenigstens in einem Abschnitt (14) einen ersten Übergangsbereich (18) aufweist, in dem sich der Seitenbereich (11) in einer Höhenrichtung (17) von der Unterseite (10) zu der Oberseite (9) von einem inneren Seitenwandbereich (15) zu einem äußeren Seitenwandbereich (16) nach außen erweitert, und
der erste Übergangsbereich (18) von dem inneren Seitenwandbereich (15) zu dem äußeren Seitenwandbereich (16) mit einer kontinuierlichen Formänderung des Seitenbereichs (11) ausgeführt ist.

2. Transponder (5) nach Anspruch 1, **dadurch gekennzeichnet, dass**
der erste Übergangsbereich (18) von dem inneren Seitenwandbereich (15) zu dem äußeren Seitenwandbereich (16) mit einem konkaven Verlauf des Seitenbereichs (11), insbesondere mit einer konkaven Bogenform, oder mit einer geradlinigen Verbindung zwischen dem inneren Seitenwandbereich (15) und dem äußeren Seitenwandbereich (16) ausgeführt ist.

3. Transponder (5) nach einem der Ansprüche 1 oder 2, **dadurch gekennzeichnet, dass**
der Seitenbereich (11) wenigstens in einem Abschnitt (14) einen zweiten Übergangsbereich (20) aufweist, in dem sich der Seitenbereich (11) in der Höhenrichtung (17) von der Unterseite (10) zu der Oberseite (9) von dem äußeren Seitenwandbereich (16) zu einem zurückgezogenen Seitenwandbereich (19) nach innen reduziert,
und der zweite Übergangsbereich (20) von dem äußeren Seitenwandbereich (16) zu dem zurückgezogenen Seitenwandbereich (19) mit einer kontinuierlichen Formänderung des Seitenbereichs (11) ausgeführt ist.

4. Transponder (5) nach einem der vorhergehenden Ansprüche, **dadurch gekennzeichnet, dass**
der zweite Übergangsbereich (20) von dem äußeren Seitenwandbereich (16) zu dem zurückgezogenen Seitenwandbereich (19) mit einem konkaven Verlauf des Seitenbereichs (11), insbesondere mit einer konkaven Bogenform, oder mit einer geradlinigen Verbindung zwischen dem äußeren Seitenwandbereich (16) und dem zurückgezogenen Seitenwandbereich (19) ausgeführt ist.

5. Transponder (5) nach einem der vorhergehenden Ansprüche, **dadurch gekennzeichnet, dass**
sich der Abschnitt (14) mit dem ersten Übergangsbereich (18), in dem sich der Seitenbereich (11) in der Höhenrichtung (17) von der Unterseite (10) zu der Oberseite (9) von einem inneren Seitenwandbereich (15) zu einem äußeren Seitenwandbereich (16) nach außen erweitert, in Umfangsrichtung (12) entlang des gesamten Seitenbereichs (11) erstreckt.

6. Transponder (5) nach einem der vorhergehenden Ansprüche, **dadurch gekennzeichnet, dass**
der äußere Seitenwandbereich (16) an der Oberseite (9) des Kunststoffgehäusekörpers (6) ausgeführt ist, oder
der zurückgezogene Seitenwandbereich (19) an der Oberseite (9) des Kunststoffgehäusekörpers (6) ausgeführt ist.

7. Transponder (5) nach einem der vorhergehenden Ansprüche, **dadurch gekennzeichnet, dass**
der innere Seitenwandbereich (15) an der Unterseite (10) des Kunststoffgehäusekörpers (6) ausgeführt ist.

8. Transponder (5) nach einem der vorhergehenden Ansprüche, **dadurch gekennzeichnet, dass**
die Antenne (7) eine ebene Ausgestaltung aufweist und parallel zu der Oberseite (9) und/oder der Unterseite (10) in dem Kunststoffgehäusekörper (6) angeordnet ist, wobei
die Antenne (7) in der Höhenrichtung (17) von der Unterseite (10) zu der Oberseite (9) in einer Höhe positioniert ist, in welcher der Kunststoffgehäusekörper (6) den größten Querschnitt aufweist.

9. Transponder (5) nach einem der vorhergehenden Ansprüche, **dadurch gekennzeichnet, dass**
sich der äußere Seitenwandbereich (16) gegenüber dem inneren Seitenwandbereich (15) um eine Länge von weniger als einem Abstand zwischen der Unterseite (10) und der Oberseite (9) erweitert.

10. Verfahren zum Herstellen eines Transponders (5) zur Kurzreichweitenkommunikation nach einem der vorhergehenden Ansprüche 1 bis 9, umfassend die Schritte
Bereitstellen einer Gussform mit einem im Wesentlichen ebenen Bodenbereich und einem sich daran anschließenden Seitenbereich, wobei der Seitenbereich wenigstens in einem Abschnitt einen ersten Übergangsbereich aufweist, in dem sich der Seitenbereich von einem inneren Seitenwandbereich zu einem äußeren Seitenwandbereich nach außen erweitert,
Gießen einer ersten Materialschicht (21) in die Gussform,
Positionieren einer Antenne (7) und eines mit der Antenne (7) elektrisch verbundenen Kommunikationschips (8) auf der ersten Materialschicht (21),
Gießen einer zweiten Materialschicht (22) in die Gussform, welche sich mit der ersten Materialschicht (21) zu einem Kunststoffgehäusekörper (6) verbindet und zusammen mit der ersten Materialschicht die Antenne (7) sowie den Kommunikationschip (8) umschließt,
Verfestigen der ersten Materialschicht (21), und
Verfestigen der zweiten Materialschicht (22).

11. Kunststoffbehälter (1) mit einem Behältervolumen (2), das von einer Behälterwand (3) umgeben ist, wobei in der Behälterwand (3) wenigstens eine Befüll- und/oder Entnahmeöffnung (4) ausgebildet ist, und einem an der Behälterwand (3) angebrachten Transponder (5) zur Kurzreichweitenkommunikation nach einem der Ansprüche 1 bis 9, wobei
der Kunststoffbehälter (1) einteilig durch Blasformen eines aus einem extrudierten, plastifizierten Kunststoffmaterial hergestellten Vorformlings (25) in einem Blasformwerkzeug hergestellt ist, und
der Transponder (5) an seiner Oberseite (9) und seinem Seitenbereich (11) von dem plastifizierten Kunststoffmaterial des Vorformlings (25) umflossen und in der Behälterwand (3) verankert ist.

12. Kunststoffbehälter (1) nach Anspruch 11, **dadurch gekennzeichnet, dass**
der Transponder (5) an einer Außenseite (33) der Behälterwand (3) positioniert ist, und die Unterseite (10) des Transponders (5) einen Teil einer Außenfläche (33) der Behälterwand (3) bildet.

13. Kunststoffbehälter (1) nach einem der Ansprüche 11 oder 12, **dadurch gekennzeichnet, dass**
der Transponder (5) eine Erstreckung in der Höhenrichtung (17) von der Unterseite (10) zu der Oberseite (9) aufweist, die kleiner als eine Wandstärke (23) der Behälterwand (3) ist, vorzugsweise kleiner als 80% der Wandstärke (23) der Behälterwand (3), besonders bevorzugt kleiner als 60% der Wandstärke (23) der Behälterwand (3).

14. Kunststoffbehälter (1) nach einem der Ansprüche 11 bis 13, **dadurch gekennzeichnet, dass**
die Behälterwand (3) wenigstens einen Wandabschnitt mit einer Biegung aufweist,
der Transponder (5) in diesem Wandabschnitt positioniert ist, und
der Transponder (5) in Richtung der Biegung eine Ausdehnung aufweist, die einem Winkelbereich von weniger als 20°, vorzugsweise weniger als 15°, besonders bevorzugt weniger als 10° einer Umfangsrichtung (24) des Kunststoffbehälters (1) entspricht.

15. Kunststoffbehälter (1) nach einem der Ansprüche 11 bis 13, **dadurch gekennzeichnet, dass**
die Behälterwand (3) wenigstens einen Wandabschnitt mit einer Biegung aufweist,
der Transponder (3) in diesem Wandabschnitt positioniert ist, und
der Transponder (5) an seiner Unterseite (10) mit einer Biegung ausgeführt ist, die der Biegung der Behälterwand (1) entspricht.

16. Verfahren zum Herstellen eines Kunststoffbehälters (1) mit einem Behältervolumen (2), das von einer Behälterwand (3) umgeben ist, wobei in der Behälterwand (3) wenigstens eine Befüll- und/oder Entnahmeöffnung (4) ausgebildet ist, und einem an der Behälterwand (3) angebrachten Transponder (5) zur Kurzreichweitenkommunikation nach einem der Ansprüche 1 bis 9 in einem Blasformprozess, umfassend die Schritte
Plastifizieren von thermoplastischem Kunststoffmaterial,
Extrudieren des plastifizierten Kunststoffmaterials zu einem Vorformling (25),
Positionieren des Transponders (5) an einer Außenseite des Vorformlings (25), und
Aufweiten und Umformen des Vorformlings (25) zu dem Kunststoffbehälter (1) innerhalb eines Blasformwerkzeugs, wobei
der Transponder (5) an seiner Oberseite (9) und seinem Seitenbereich (11) von dem plastifizierten Kunststoffmaterial umflossen und in der Behälterwand (3) verankert wird.

17. Verfahren nach Anspruch 16, **dadurch gekennzeichnet, dass**
das Positionieren des Transponders (5) an einer Außenseite des Vorformlings (25) ein Anhaften des Transponders (5) an dem Vorformling (25) außerhalb des Blasformwerkzeugs vor dem Aufweiten und Umformen des Vorformlings (25) zu dem Kunststoffbehälter (1) innerhalb des Blasformwerkzeugs umfasst.

18. Verfahren nach Anspruch 16, **dadurch gekennzeichnet, dass**
das Positionieren des Transponders (5) an einer Außenseite des Vorformlings (25) ein Positionieren des Transponders (5) in dem mehrteiligen Blasformwerkzeug vor einem Einbringen des Vorformlings (25) zum Aufweiten und Umformen zu dem Kunststoffbehälter (1) innerhalb des mehrteiligen Blasformwerkzeugs umfasst.

## Claims

1. Transponder (5) for short-range communication with a plastics housing body (6), an antenna (7) and a communication chip (8) electrically connected to the antenna (7), the antenna (7) and the communication chip (8) being arranged in the plastics housing body (6),
the plastics housing body (6) having a substantially flat upper face (9), a substantially flat lower face (10) and a side region (11) connecting the upper face (9) and the lower face (10), and
the transponder (5) being designed to issue an identifier, in particular for a plastics container (1) connected thereto,
the transponder (5) being **characterized in that** the side region (11) has, at least in one portion (14), a first transition region (18) in which the side region (11), in a height direction (17) from the lower face (10) to the upper face (9), expands outwardly from an inner side-wall region (15) to an outer side-wall region (16), and
the first transition region (18) from the inner side-wall region (15) to the outer side-wall region (16) is designed with a continuous change in shape of the side region (11).

2. Transponder (5) according to claim 1, **characterized in that**
the first transition region (18) from the inner side-wall region (15) to the outer side-wall region (16) is designed with a concave profile of the side region (11), in particular with a concave arch shape, or with a straight connection between the inner side-wall region (15) and the outer side-wall region (16).

3. Transponder (5) according to either claim 1 or claim 2, **characterized in that**
the side region (11) has, in at least one portion (14), a second transition region (20) in which the side region (11), in the height direction (17) from the lower face (10) to the upper face (9), reduces inwardly from the outer side-wall region (16) to a recessed side-wall region (19),
and the second transition region (20) from the outer side-wall region (16) to the recessed side-wall region (19) is designed with a continuous change in shape of the side region (11).

4. Transponder (5) according to any of the preceding claims, **characterized in that**
the second transition region (20) from the outer side-wall region (16) to the recessed side-wall region (19) is designed with a concave profile of the side region (11), in particular with a concave arch shape, or with a straight connection between the outer side-wall region (16) and the recessed side-wall region (19).

5. Transponder (5) according to any of the preceding claims, **characterized in that**
the portion (14) having the first transition region (18), in which the side region (11), in the height direction (17) from the lower face (10) to the upper face (9), expands outwardly from an inner side-wall region (15) to an outer side-wall region (16), extends in the circumferential direction (12) along the entire side region (11).

6. Transponder (5) according to any of the preceding claims, **characterized in that**
the outer side-wall region (16) is formed on the upper face (9) of the plastics housing body (6), or
the recessed side-wall region (19) is formed on the upper face (9) of the plastics housing body (6).

7. Transponder (5) according to any of the preceding claims, **characterized in that**
the inner side-wall region (15) is formed on the lower face (10) of the plastics housing body (6).

8. Transponder (5) according to any of the preceding claims, **characterized in that**
the antenna (7) has a flat design and is arranged parallel to the upper face (9) and/or the lower face (10) in the plastics housing body (6),
the antenna (7), in the height direction (17) from the lower face (10) to the upper face (9), being positioned at a height at which the plastics housing body (6) has the largest cross section.

9. Transponder (5) according to any of the preceding claims, **characterized in that**
the outer side-wall region (16) expands relative to the inner side-wall region (15) by a length of less than a distance between the lower face (10) and the upper face (9).

10. Method for producing a transponder (5) for short-range communication according to any of the preceding claims 1 to 9, comprising the steps of
providing a mold having a substantially flat bottom region and an adjoining side region, wherein the side region has, at least in one portion, a first transition region in which the side region expands outwardly from an inner side-wall region to an outer side-wall region,
casting a first material layer (21) into the mold,
positioning an antenna (7) and a communication chip (8) electrically connected to the antenna (7) on the first material layer (21),
casting a second material layer (22) into the mold, which combines with the first material layer (21) to form a plastics housing body (6) and, together with the first material layer, encloses the antenna (7) and the communication chip (8),
solidifying the first material layer (21), and
solidifying the second material layer (22).

11. Plastics container (1) having a container volume (2) which is surrounded by a container wall (3), wherein at least one filling and/or removal opening (4) is formed in the container wall (3), and having a transponder (5) for short-range communication according to any of claims 1 to 9 attached to the container wall (3), wherein
the plastics container (1) is produced in one piece by blow molding a preform (25) made from an extruded, plasticized plastics material in a blow molding tool, and
the transponder (5) is surrounded on its upper face (9) and side region (11) by the plasticized plastics material of the preform (25) and is anchored in the container wall (3).

12. Plastics container (1) according to claim 11, **characterized in that**
the transponder (5) is positioned on an outer face (33) of the container wall (3), and the lower face (10) of the transponder (5) forms part of an outer surface (33) of the container wall (3).

13. Plastics container (1) according to either claim 11 or claim 12, **characterized in that**
the transponder (5) has, in the height direction (17) from the lower face (10) to the upper face (9), an extension which is less than a wall thickness (23) of the container wall (3), preferably less than 80% of the wall thickness (23) of the container wall (3), particularly preferably less than 60% of the wall thickness (23) of the container wall (3).

14. Plastics container (1) according to any of claims 11 to 13, **characterized in that**
the container wall (3) has at least one wall portion with a bend,
the transponder (5) is positioned in this wall portion, and
the transponder (5) has, in the direction of the bend, an expansion which corresponds to an angular range of less than 20°, preferably less than 15°, particularly preferably less than 10°, of a circumferential direction (24) of the plastics container (1).

15. Plastics container (1) according to any of claims 11 to 13, **characterized in that**
the container wall (3) has at least one wall portion with a bend,
the transponder (3) is positioned in this wall portion, and
the transponder (5) is designed with a bend on its lower face (10) which corresponds to the bend in the container wall (1).

16. Method for producing a plastics container (1) having a container volume (2) which is surrounded by a container wall (3), wherein at least one filling and/or removal opening (4) is formed in the container wall (3), and having a transponder (5) for short-range communication according to any of claims 1 to 9 attached to the container wall (3), in a blow molding process, comprising the steps of
plasticizing thermoplastic plastics material,
extruding the plasticized plastics material to form a preform (25),
positioning the transponder (5) on an outer face of the preform (25), and
expanding and shaping the preform (25) to form the plastics container (1) inside a blow molding tool, wherein
the transponder (5) is surrounded on its upper face (9) and side region (11) by the plasticized plastics material and is anchored in the container wall (3).

17. Method according to claim 16, **characterized in that**
the positioning of the transponder (5) on an outer face of the preform (25) comprises adhering the transponder (5) to the preform (25) outside the blow molding tool before the preform (25) is expanded and shaped to form the plastics container (1) inside the blow molding tool.

18. Method according to claim 16, **characterized in that**
the positioning of the transponder (5) on an outer face of the preform (25) comprises positioning the transponder (5) in the multi-part blow molding tool before the preform (25) is introduced for expanding and shaping to form the plastics container (1) inside the blow molding tool.

## Revendications

1. Transpondeur (5) pour une communication à courte portée comportant un corps de boîtier en plastique (6), une antenne (7) et une puce de communication (8) connectée électriquement à l'antenne (7), l'antenne (7) et la puce de communication (8) étant disposées dans le corps de boîtier en plastique (6),
le corps de boîtier en plastique (6) présentant un côté supérieur (9) sensiblement plat, un côté inférieur (10) sensiblement plat et une zone latérale (11) reliant le côté supérieur (9) et le côté inférieur (10), et
le transpondeur (5) étant configuré pour délivrer un étiquetage, en particulier pour un récipient en plastique (1) auquel il est relié,
le transpondeur (5) étant **caractérisé en ce que** la zone latérale (11) présente, au moins dans une section (14), une première zone de transition (18) dans laquelle la zone latérale (11) s'évase vers le haut dans la direction de la hauteur (17) depuis le côté inférieur (10) jusqu'au côté supérieur (9) et depuis une zone de paroi latérale intérieure (15) jusqu'à une zone de paroi latérale extérieure (16), et
la première zone de transition (18) étant conçue avec un changement de forme continu de la zone latérale (11) depuis la zone de paroi latérale intérieure (15) jusqu'à la zone de paroi latérale extérieure (16).

2. Transpondeur (5) selon la revendication 1, **caractérisé en ce que**
la première zone de transition (18) est conçue avec un profil concave de la zone latérale (11), en particulier avec une forme d'arc concave, ou avec une liaison rectiligne entre la zone de paroi latérale intérieure (15) et la zone de paroi latérale extérieure (16), depuis la zone de paroi latérale intérieure (15) jusqu'à la zone de paroi latérale extérieure (16).

3. Transpondeur (5) selon l'une des revendications 1 ou 2, **caractérisé en ce que**
la zone latérale (11) présente, au moins dans une section (14), une seconde zone de transition (20) dans laquelle la zone latérale (11) se réduit vers l'intérieur dans la direction de la hauteur (17) depuis le côté inférieur (10) jusqu'au côté supérieur (9) et depuis la zone de paroi latérale extérieure (16) jusqu'à une zone de paroi latérale en retrait (19),
et la seconde zone de transition (20) est conçue avec un changement de forme continu de la zone latérale (11) depuis la zone de paroi latérale extérieure (16) jusqu'à la zone de paroi latérale en retrait (19).

4. Transpondeur (5) selon l'une des revendications précédentes, **caractérisé en ce que**
la seconde zone de transition (20) est conçue avec un profil concave de la zone latérale (11), en particulier avec une forme d'arc concave, ou avec une liaison rectiligne entre la zone de paroi latérale extérieure (16) et la zone de paroi latérale en retrait (19), depuis la zone de paroi latérale extérieure (16) jusqu'à la zone de paroi latérale en retrait (19).

5. Transpondeur (5) selon l'une des revendications précédentes, **caractérisé en ce que**
la section (14) s'étend avec la première zone de transition (18), dans laquelle la zone latérale (11) s'élargit vers l'extérieur dans la direction de la hauteur (17) depuis le côté inférieur (10) jusqu'au côté supérieur (9) et depuis une zone de paroi latérale intérieure (15) jusqu'à une zone de paroi latérale extérieure (16), dans la direction circonférentielle (12) le long de toute la zone latérale (11).

6. Transpondeur (5) selon l'une des revendications précédentes, **caractérisé en ce que**
la zone de paroi latérale extérieure (16) est conçue sur le côté supérieur (9) du corps de boîtier en plastique (6), ou
la zone de paroi latérale en retrait (19) est conçue sur le côté supérieur (9) du corps de boîtier en plastique (6).

7. Transpondeur (5) selon l'une des revendications précédentes, **caractérisé en ce que**
la zone de paroi latérale intérieure (15) est conçue sur le côté inférieur (10) du corps de boîtier en plastique (6).

8. Transpondeur (5) selon l'une des revendications précédentes, **caractérisé en ce que**
l'antenne (7) présente une conception plane et est disposée parallèlement au côté supérieur (9) et/ou au côté inférieur (10) dans le corps de boîtier en plastique (6), dans lequel
l'antenne (7) est positionnée dans la direction de la hauteur (17) depuis le côté inférieur (10) jusqu'au côté supérieur (9) à une hauteur à laquelle le corps de boîtier en plastique (6) présente la plus grande section transversale.

9. Transpondeur (5) selon l'une des revendications précédentes, **caractérisé en ce que**
la zone de paroi latérale extérieure (16) s'élargit par rapport à la zone de paroi latérale intérieure (15) sur une longueur inférieure à une distance entre le côté inférieur (10) et le côté supérieur (9).

10. Procédé de fabrication d'un transpondeur (5) pour une communication à courte portée selon l'une des revendications précédentes 1 à 9, comprenant les étapes de
fourniture d'un moule comportant une zone de fond sensiblement plane et une zone latérale attenante, la zone latérale présentant, au moins dans une section, une première zone de transition dans laquelle la zone latérale s'élargit vers l'extérieur depuis une zone de paroi latérale intérieure jusqu'à une zone de paroi latérale extérieure,
coulée d'une première couche de matériau (21) dans le moule,
positionnement d'une antenne (7) et d'une puce de communication (8) connectée électriquement à l'antenne (7) sur la première couche de matériau (21),
coulée d'une seconde couche de matériau (22) dans le moule, laquelle se lie à la première couche de matériau (21) pour former un corps de boîtier en plastique (6) et renferme l'antenne (7) ainsi que la puce de communication (8) avec la première couche de matériau,
solidification de la première couche de matériau (21), et
solidification de la seconde couche de matériau (22).

11. Récipient en plastique (1) comportant un volume de récipient (2) qui est entouré par une paroi de récipient (3), au moins une ouverture de remplissage et/ou de prélèvement (4) étant formée dans la paroi de récipient (3), et un transpondeur (5) monté sur la paroi de récipient (3) pour une communication à courte portée selon l'une des revendications 1 à 9, dans lequel
le récipient en plastique (1) est fabriqué d'une seule pièce par moulage par soufflage d'une préforme (25) fabriquée en matériau en plastique plastifié extrudé dans un outil de moulage par soufflage, et
le transpondeur (5) est entouré par le matériau en plastique plastifié de la préforme (25) au niveau de son côté supérieur (9) et de sa zone latérale (11) et est ancré dans la paroi de récipient (3).

12. Récipient en plastique (1) selon la revendication 11, **caractérisé en ce que**
le transpondeur (5) est positionné sur un côté extérieur (33) de la paroi de récipient (3), et le côté inférieur (10) du transpondeur (5) fait partie d'une surface extérieure (33) de la paroi de récipient (3).

13. Réservoir en plastique (1) selon l'une des revendications 11 ou 12, **caractérisé en ce que**
le transpondeur (5) présente une extension dans la direction de la hauteur (17) depuis le côté inférieur (10) jusqu'au côté supérieur (9), laquelle extension est inférieure à une épaisseur de paroi (23) de la paroi de récipient (3), de préférence inférieure à 80 % de l'épaisseur de paroi (23) de la paroi de récipient (3), de manière particulièrement préférée inférieure à 60 % de l'épaisseur de paroi (23) de la paroi de récipient (3).

14. Récipient en plastique (1) selon l'une des revendications 11 à 13, **caractérisé en ce que**
la paroi de récipient (3) présente au moins une section de paroi comportant une courbure,
le transpondeur (5) est positionné dans ladite section de paroi, et
le transpondeur (5) présente une étendue en direction de la courbure qui correspond à une plage angulaire de moins de 20°, de préférence de moins de 15°, de manière particulièrement préférée de moins de 10° d'une direction circonférentielle (24) du récipient en plastique (1).

15. Récipient en plastique (1) selon l'une des revendications 11 à 13, **caractérisé en ce que**
la paroi de récipient (3) présente au moins une section de paroi comportant une courbure,
le transpondeur (3) est positionné dans ladite section de paroi, et
le transpondeur (5) est conçu avec une courbure sur son côté inférieur (10) qui correspond à la courbure de la paroi de récipient (1).

16. Procédé de fabrication d'un récipient en plastique (1) comportant un volume de récipient (2) qui est entouré par une paroi de récipient (3), au moins une ouverture de remplissage et/ou de prélèvement (4) étant formée dans la paroi de récipient (3), et un transpondeur (5) monté sur la paroi de récipient (3) pour une communication à courte portée selon l'une des revendications 1 à 9 dans un procédé de moulage par soufflage, comprenant les étapes de
plastification de matériau en plastique thermoplastique,
extrusion du matériau en plastique plastifié en une préforme (25),
positionnement du transpondeur (5) sur un côté extérieur de la préforme (25), et
expansion et formage de la préforme (25) pour former le récipient en plastique (1) dans un outil de moulage par soufflage,
le transpondeur (5) étant entouré par le matériau en plastique plastifié au niveau de son côté supérieur (9) et de sa zone latérale (11) et étant ancré dans la paroi de récipient (3).

17. Procédé selon la revendication 16, **caractérisé en ce que**
le positionnement du transpondeur (5) sur un côté extérieur de la préforme (25) comprend le fait de coller le transpondeur (5) à la préforme (25) à l'extérieur de l'outil de moulage par soufflage avant que la préforme (25) ne soit expansée et mise en forme pour former le récipient en plastique (1) à l'intérieur de l'outil de moulage par soufflage.

18. Procédé selon la revendication 16, **caractérisé en ce que**
le positionnement du transpondeur (5) sur un côté extérieur de la préforme (25) comprend le positionnement du transpondeur (5) dans l'outil de moulage par soufflage en plusieurs parties avant l'introduction de la préforme (25) pour l'expansion et le formage afin de former le récipient en plastique (1) à l'intérieur de l'outil de moulage par soufflage en plusieurs parties.
